# EUROPÄISCHE PATENTSCHRIFT

(11) **EP 2 826 567 B1**
(45) Veröffentlichungstag und Bekanntmachung des Hinweises auf die Patenterteilung: **11.04.2018**
(21) Anmeldenummer: 14185632.8
(22) Anmeldetag: 04.07.2008
(51) Int. Cl.: B05B 15/12, B01D 46/00, B01D 46/42, B01D 46/46, G01F 23/26, B05B 13/04

(54) **Verfahren zum Zuführen von Hilfsmaterial und Hilfsmaterialaufnahmebehälter**
Method for supplying auxiliary material and auxiliary material container
Procédé d'acheminement de matériel auxiliaire et récipient de collecte de matériel auxiliaire

(30) Priorität: 24.08.2007 DE 102007040899
(43) Veröffentlichungstag der Anmeldung: 21.01.2015
(62) Teilanmeldung aus: 08784622.6
(73) Patentinhaber: Dürr Systems AG, 74321 Bietigheim-Bissingen (DE)
(72) Erfinder: Holzheimer, Jens, 71732 Tamm (DE); Wieland, Dietmar, 71336 Waiblingen (DE)
(74) Vertreter: Hoeger, Stellrecht & Partner Patentanwälte mbB

(56) Entgegenhaltungen:
- DE-A1- 4 211 465
- DE-A1- 10 361 266
- DE-A1- 19 924 130

## Beschreibung

Die vorliegende Erfindung betrifft ein Verfahren zum Zuführen von frischem Hilfsmaterial, das einem mit Nasslack-Overspray beladenen Rohgasstrom zugegeben wird, bevor der Rohgasstrom mindestens ein Filterelement zum Abtrennen des Oversprays aus dem Rohgasstrom passiert, in mindestens eine Filtervorrichtung, die mindestens einen Hilfsmaterialaufnahmebehälter umfasst, der sich in einer Arbeitsposition befindet, während der Rohgasstrom das Filterelement passiert.

Ein solches Verfahren ist beispielsweise aus der DE 10 2005 048 579 A1 bekannt.

Bei diesem bekannten Verfahren erfolgt die trockene Abtrennung des Nasslack-Oversprays aus dem Rohgasstrom einer Spritzkabine in der Filtervorrichtung, nachdem mit einer Düsenanordnung frisches, fließfähiges, partikelförmiges, als "Precoat"-Material bezeichnetes Hilfsmaterial in den Rohgasstrom abgegeben wurde.

Dieses Hilfsmaterial dient dazu, sich als Sperrschicht an den Oberflächen des Filterelements abzusetzen, um zu verhindern, dass diese Flächen durch anhaftende Overspray-Partikel verkleben. Durch periodisches Abreinigen der Filterelemente der Filtervorrichtung gelangt das Gemisch aus Hilfsmaterial und Nasslack-Overspray von den Filterelementen in Hilfsmaterialaufnahmebehälter, aus denen es abgesaugt werden kann, um der Düsenanordnung für eine erneute Verwendung als Hilfsmaterial zugeführt zu werden. Ferner kann das im Hilfsmaterialaufnahmebehälter befindliche Gemisch aus Hilfsmaterial und Nasslack-Overspray mittels Druckluftpulsen aus einer Druckluftlanze aufgewirbelt werden, um so aus dem Hilfsmaterialaufnahmebehälter zu den Filterelementen aufzusteigen und sich dort abzusetzen.

Um zu verhindern, dass während der Abgabe von Hilfsmaterial in den Rohgasstrom aus der Düsenanordnung Hilfsmaterial in den Applikationsbereich der Lackieranlage gelangt, wird bei diesem bekannten Verfahren der Strömungsweg des Rohgasstroms von dem Applikationsbereich zu der Filtervorrichtung zeitweise verschlossen. Das aus den Hilfsmaterialaufnahmebehältern aufgewirbelte Hilfsmaterial reicht nicht aus, um eine ausreichende Schutzschicht auf den Filterelementen zu erzeugen. Außerdem kann frisches Hilfsmaterial nur durch die Düsenanordnung in den Rohgasstrom eingebracht werden.

Die DE 103 61 266 A1 offenbart ein Verfahren gemäß dem Oberbegriff von Anspruch 1.

Die DE 42 11 465 A1 offenbart ein Verfahren zum Zuführen von frischem Hilfsmaterial, das einem mit Nasslack-Overspray beladenen Rohgasstrom zugegeben wird, bevor der Rohgasstrom ein Filterelement zum Abtrennen des Oversprays aus dem Rohgasstrom passiert, in eine Mischkammer, in welcher sich das Hilfsmaterial an den Overspray anlagert, während der Rohgasstrom die Mischkammer passiert, wobei das Zuführen des frischen Hilfsmaterial direkt in die Mischkammer erfolgt, während sich die Mischkammer in einer Arbeitsposition befindet. Von dem Filterelement abgereinigtes Gemisch aus Hilfsmaterial und Nasslack-Overspray gelangt beim Abreinigen in einen Bunker eines das Filterelement enthaltenden Abscheiders.

Die DE 199 24 130 A1 offenbart ein Verfahren zum Zuführen von frischem Hilfsmaterial, das einem mit Schadstoffen beladenen Rohgasstrom zugegeben wird, bevor der Rohgasstrom ein Filterelement zum Abtrennen der Schadstoffe aus dem Rohgasstrom passiert, in eine Filtervorrichtung, die einen Entsorgungsbehälter umfasst, der sich in einer Arbeitsposition befindet, während der Rohgasstrom das Filterelement passiert, wobei der Entsorgungsbehälter mit frischem Hilfsmaterial teilweise vorbefüllt werden kann.

Der vorliegenden Erfindung liegt die Aufgabe zugrunde, ein Verfahren der eingangs genannten Art zu schaffen, welches eine bessere Beaufschlagung des Rohgasstroms mit dem Hilfsmaterial und eine besonders effiziente Zufuhr von frischem Hilfsmaterial in die mindestens eine Filtervorrichtung ermöglicht.

Diese Aufgabe wird durch ein Verfahren nach Anspruch 1 gelöst.

Der Hilfsmaterialaufnahmebehälter ist in der Arbeitsposition so unterhalb von mindestens einem Filterelement angeordnet, dass das von dem Filterelement abgereinigte Gemisch aus Hilfsmaterial und Nasslack-Overspray beim Abreinigen nach unten in den Hilfsmaterialaufnahmebehälter gelangt.

Ferner ist vorzugsweise vorgesehen, dass das frische Hilfsmaterial aus dem Hilfsmaterialaufnahmebehälter direkt in den Rohgasstrom gelangt.

Hierzu ist es besonders günstig, wenn der Rohgasstrom durch den Hilfsmaterialaufnahmebehälter hindurch geleitet wird.

Die Aufnahme des Hilfsmaterials aus dem Hilfsmaterialaufnahmebehälter in den Rohgasstrom kann verbessert werden, wenn das Hilfsmaterial in dem Hilfsmaterialaufnahmebehälter mittels einer Aufwirbelungseinheit aufgewirbelt wird.

Die erfindungsgemäße Lösung bietet den Vorteil, dass auf eine Düsenanordnung zum Zuführen von frischem Hilfsmaterial in die Filtervorrichtung verzichtet werden kann. Hierdurch entfällt auch die Notwendigkeit, den Strömungsweg des Rohgasstroms von dem Applikationsbereich zu der Filtervorrichtung zeitweise zu verschließen, um zu verhindern, dass Hilfsmaterial in den Applikationsbereich gelangt.

Bei einer bevorzugten Ausgestaltung der Erfindung ist vorgesehen, dass der mindestens eine Hilfsmaterialaufnahmebehälter unbeweglich in der Arbeitsposition montiert ist.

Hierdurch kann der Hilfsmaterialaufnahmebehälter zusammen mit Begrenzungswänden der Filtervorrichtung eine luftdichte Einheit bilden, die ein staubfreies Handhaben der partikelförmigen Materialien (Hilfsmaterial und Nasslack-Overspray) gewährleistet.

Außerdem muss der Hilfsmaterialaufnahmebehälter nicht von anderen Begrenzungswänden der Filtervorrichtung getrennt werden, um frisches Hilfsmaterial in den Hilfsmaterialaufnahmebehälter zuzuführen. Hierdurch wird eine Verschmutzung der Umgebung, die beim Trennen des Hilfsmaterialaufnahmebehälters von angrenzenden Begrenzungswänden durch Staubaustritt verursacht werden könnte, vermieden.

Ferner ist ein unbeweglich in der Arbeitsposition montierter Hilfsmaterialaufnahmebehälter besonders einfach herstellbar.

Bei der Erfindung ist vorgesehen, dass das Hilfsmaterial durch eine an den Hilfsmaterialaufnahmebehälter angeschlossene Hilfsmaterial-Zuführleitung in den Hilfsmaterialaufnahmebehälter zugeführt wird.

Dabei kann insbesondere vorgesehen sein, dass die Hilfsmaterial-Zuführleitung eine flexible Schlauchleitung umfasst.

Vorzugsweise wird das frische Hilfsmaterial aus mindestens einem Vorlagebehälter in den mindestens einen Hilfsmaterialaufnahmebehälter gefördert.

Diese Förderung kann mittels eines sogenannten Blowpots oder einer Pulverdosierpumpe, beispielsweise einer sogenannten DDF-Pumpe oder einer anderen nach dem Dichtstromprinzip mit Saug-/Druckwechsel fördernden Dosierpumpe, erfolgen. Mittels derartiger Pumpen, insbesondere DDF-Pumpen, werden pulverförmige Substanzen besonders schonend und genau dosierbar über relativ große Entfernungen gefördert.

Blowpots sind an sich beispielsweise aus der JP 02123025 A oder der JP 06278868 A bekannt und wurden in Beschichtungsanlagen bisher dazu verwendet, Pulverlack zu den in der Nähe der Zerstäuber befindlichen Applikationsbehältern zu fördern. Es handelt sich um relativ kleine verschließbare Behälter mit einem luftdurchlässigen Boden, durch den Luft zum Fluidisieren des Pulvers und zu dessen Förderung in den Behälter geleitet wird.

Um in dem Hilfsmaterialaufnahmebehälter Platz für frisches Hilfsmaterial zu schaffen, kann vorgesehen sein, dass mit Overspray vermischtes Hilfsmaterial aus dem mindestens einen Hilfsmaterialaufnahmebehälter durch eine an den Hilfsmaterialaufnahmebehälter angeschlossene Hilfsmaterial-Abführleitung entnommen wird.

Dabei ist es für eine effiziente und möglichst vollständige Entleerung des Hilfsmaterialaufnahmebehälters günstig, wenn mindestens eine Hilfsmaterial-Abführleitung in einem Eckbereich des Hilfsmaterialaufnahmebehälters in einen Innenraum des Hilfsmaterialaufnahmebehälters mündet.

Besonders günstig ist es für eine vollständige Entleerung, wenn mindestens zwei Hilfsmaterial-Abführleitungen in einen Innenraum des Hilfsmaterialaufnahmebehälters münden, vorzugsweise in voneinander verschiedenen Eckbereichen des Hilfsmaterialaufnahmebehälters.

Das mit Overspray vermischte Hilfsmaterial aus dem mindestens einen Hilfsmaterialaufnahmebehälter wird vorzugsweise in einen Sammelbehälter gefördert, von wo es einer Wiederverwertung, einer Weiterverwertung oder einer Entsorgung zugeführt wird.

Als besonders günstig hat es sich erwiesen, wenn das mit Overspray vermischte Hilfsmaterial aus dem mindestens einen Hilfsmaterialaufnahmebehälter abgesaugt wird.

Mit Overspray vermischtes Hilfsmaterial wird vorzugsweise aus mindestens einem Hilfsmaterialaufnahmebehälter entnommen, um den Hilfsmaterialaufnahmebehälter zu entleeren, bevor frisches Hilfsmaterial in den Hilfsmaterialaufnahmebehälter zugeführt wird. Auf diese Weise wird verhindert, dass noch im Hilfsmaterialaufnahmebehälter befindlicher Overspray die Qualität des zugeführten frischen Hilfsmaterials verschlechtert.

Das mit Overspray vermischte Hilfsmaterial kann aus mindestens einem Hilfsmaterialaufnahmebehälter entnommen werden, wenn das Hilfsmaterial in dem betreffenden Hilfsmaterialaufnahmebehälter einen vorgegebenen Füllstand erreicht.

Dieser Füllstand des Hilfsmaterials kann insbesondere mittels eines in dem Hilfsmaterialaufnahmebehälter angeordneten Füllstandssensors gemessen werden, wodurch eine besonders zuverlässige Steuerung der Entleerung des jeweiligen Hilfsmaterialaufnahmebehälters ermöglicht wird.

Durch die Anreicherung von Nasslack-Overspray, welcher eine geringere Dichte aufweist als das Hilfsmaterial, in dem Gemisch aus Hilfsmaterial und Overspray, welches in dem Hilfsmaterialaufnahmebehälter vorhanden ist, nimmt die Dichte dieses Gemisches während des Betriebs der Filtervorrichtung immer weiter ab, so dass die Sperrschicht, welche sich auf dem mindestens einen Filterelement der Filtervorrichtung aufbaut, ein immer größeres Volumen aufweist.

Der Füllstand des Materials im Hilfsmaterialaufnahmebehälter unmittelbar vor einem Abreinigungsvorgang des Filterelements nimmt daher immer weiter ab.

Es kann daher vorgesehen sein, dass mit Overspray vermischtes Hilfsmaterial aus mindestens einem Hilfsmaterialaufnahmebehälter entnommen wird, wenn der Füllstand des Hilfsmaterials in dem Hilfsmaterialaufnahmebehälter bis auf einen vorgegebenen Mindestfüllstand, beispielsweise ungefähr 10 % des Fassungsvermögens des Hilfsmaterialaufnahmebehälters, abgesunken ist.

Alternativ hierzu kann der Füllstand des Materials im Hilfsmaterialaufnahmebehälter jeweils nach einem Abreinigungsvorgang des mindestens einen Filterelements der Filtervorrichtung gemessen werden und mit Overspray vermischtes Hilfsmaterial aus mindestens einem Hilfsmaterialaufnahmebehälter entnommen werden, wenn der Füllstand des Hilfsmaterials in dem Hilfsmaterialaufnahmebehälter bis auf einen vorgegebenen Maximalfüllstand, beispielsweise 90° des maximalen Fassungsvermögens des Hilfsmaterialaufnahmebehälters, angestiegen ist.

Insbesondere kann also vorgesehen sein, dass mindestens ein einem Hilfsmaterialaufnahmebehälter zugeordnetes Filterelement abgereinigt wird und mit Overspray vermischtes Hilfsmaterial aus dem Hilfsmaterialaufnahmebehälter entnommen wird, wenn der durch die Abreinigung angestiegene Füllstand des Hilfsmaterials in dem Hilfsmaterialaufnahmebehälter einen vorgegebenen Maximalfüllstand erreicht hat.

Um die Entnahme des mit Overspray vermischten Hilfsmaterials aus dem Hilfsmaterialaufnahmebehälter zu erleichtern, ist es günstig, wenn das mit Overspray vermischte Hilfsmaterial in mindestens einem Hilfsmaterialaufnahmebehälter fluidisiert wird, während mit Overspray vermischtes Hilfsmaterial aus dem Hilfsmaterialaufnahmebehälter entnommen wird.

Alternativ oder ergänzend hierzu kann das Absaugen des gebrauchten Materials aus dem Hilfsmaterialaufnahmebehälter dadurch unterstützt werden, dass das Hilfsmaterial in mindestens einem Hilfsmaterialaufnahmebehälter mittels einer Aufwirbelungseinrichtung zumindest zeitweise aufgewirbelt wird, während mit Overspray vermischtes Hilfsmaterial aus dem Hilfsmaterialaufnahmebehälter entnommen wird. Durch das Aufwirbeln wird nämlich das zu entnehmende Material aufgelockert und zu den Mündungsöffnungen der Abführleitungen hin bewegt.

Die vorliegende Erfindung betrifft ferner eine Vorrichtung zum Abtrennen von Nasslack-Overspray aus einem Overspray-Partikel enthaltenden Rohgasstrom, umfassend mindestens ein Filterelement zum Abtrennen des Oversprays aus dem Rohgasstrom und mindestens einen Hilfsmaterialaufnahmebehälter zum Aufnehmen eines Hilfsmaterials, das dem mit Nasslack-Overspray beladenen Rohgasstrom zugegeben wird, bevor der Rohgasstrom mindestens ein Filterelement zum Abtrennen des Oversprays aus dem Rohgasstrom passiert, während der Hilfsmaterialaufnahmebehälter sich in einer Arbeitsposition befindet.

Der vorliegenden Erfindung liegt die Aufgabe zugrunde, eine solche Vorrichtung mit einem solchen Hilfsmaterialaufnahmebehälter zu schaffen, dem frisches Hilfsmaterial in einfacher
und effizienter Weise zuführbar ist, ohne dass solches Hilfsmaterial in den Applikationsbereich einer Lackieranlage gelangt.

Diese Aufgabe wird durch eine Vorrichtung nach Anspruch 11 gelöst.

Besondere Ausgestaltungen der erfindungsgemäßen Vorrichtung sind Gegenstand der Ansprüche 12 bis 14, deren Merkmale und Vorteile bereits vorstehend im Zusammenhang mit besonderen Ausgestaltungen des erfindungsgemäßen Verfahrens erläutert worden sind.

Die erfindungsgemäße Vorrichtung zum Abtrennen von Nasslack-Overspray eignet sich insbesondere zur Verwendung in einer Anlage zum Lackieren von Gegenständen, insbesondere von Fahrzeugkarosserien, welche mindestens einen Applikationsbereich zum Applizieren von Nasslack auf die zu lackierenden Gegenstände und mindestens eine erfindungsgemäße Vorrichtung zum Abtrennen von Nasslack-Overspray umfasst.

Die Erfindung eignet sich insbesondere zur Verwendung in einem trockenen Nasslack-Overspray-Abscheidungssystem für Lackierkabinen in der Automobilindustrie oder im allgemeinen Industrie-Lackieranlagen-Bereich.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer Lackierkabine mit einer darunter angeordneten Vorrichtung zum Abtrennen von Nasslack-Overspray aus einem Overspray-Partikel enthaltenden Rohgasstrom, welche eine unter der Lackierkabine angeordnete Strömungskammer und auf beiden Seiten der Strömungskammer jeweils drei Filtermodule umfasst;
- Fig. 2: einen schematischen vertikalen Querschnitt durch die Anlage aus Fig. 1;
- Fig. 3: einen der Fig. 2 entsprechenden schematischen vertikalen Querschnitt durch die Anlage aus Fig. 1, wobei zusätzlich die jeweilige Strömungsrichtung des Rohgases, der aus den Filtermodulen austretenden Abluft und der zur Erzeugung von Querluftschleiern in die Strömungskammer eingespeisten Zuluft durch Pfeile angezeigt sind;
- Fig. 4: eine schematische Draufsicht von oben auf die Anlage aus den Fig. 1 bis 3;
- Fig. 5: eine schematische Seitenansicht der Anlage aus den Fig. 1 bis 4;
- Fig. 6: eine schematische perspektivische Darstellung der Vorrichtung zum Abtrennen von Nasslack-Overspray aus einem Overspray-Partikel enthaltenden Rohgasstrom, welche unter der Lackierkabine der Anlage aus den Fig. 1 bis 5 angeordnet ist und welche die Strömungskammer in entlang der Längsrichtung der Strömungskammer aufeinanderfolgende Abschnitte unterteilende Quertrennwände aufweist;
- Fig. 7: eine schematische perspektivische Darstellung eines einzelnen Filtermoduls, das zur Anordnung zwischen zwei benachbarten weiteren Filtermodulen vorgesehen ist (Mittelmodul);
- Fig. 8: eine schematische perspektivische Darstellung eines einzelnen Filtermoduls, das zur Anordnung neben einem weiteren Filtermodul vorgesehen ist und auf der gegenüberliegenden Seite ein Ende einer Filtermodul-Reihe bildet (Eckmodul);
- Fig. 9: einen schematischen vertikalen Querschnitt durch ein Filtermodul;
- Fig. 10: einen schematischen vertikalen Querschnitt durch ein Filtermodul und den angrenzenden Bereich der Strömungskammer, in welchem die jeweilige lokale Strömungsrichtung des Rohgasstroms durch Pfeile angezeigt ist;
- Fig. 11: eine schematische perspektivische Darstellung eines Randbereichs einer Einlassöffnung eines Filtermoduls;
- Fig. 12: eine schematische Vorderansicht eines Filtermoduls;
- Fig. 13: einen schematischen vertikalen Schnitt durch einen Hilfsmaterialaufnahmebehälter mit im Inneren des Behälters angeordnetem Füllstandssensor und Aufwirbelungseinrichtung;
- Fig. 14: eine schematische Seitenansicht einer Revisionstür des Hilfsmaterialaufnahmebehälters aus Fig. 13, mit an der Revisionstür gehaltenem Füllstandssensor und Aufwirbelungseinrichtung;
- Fig. 15: eine schematische Draufsicht auf die Außenseite der Revisionstür aus Fig. 14;
- Fig. 16: eine schematische Draufsicht von oben auf ein in dem Hilfsmaterialaufnahmebehälter aus Fig. 13 angeordnetes Auffanggitter;
- Fig. 17: eine schematische Darstellung einer Vorrichtung zum Zuführen von frischem Hilfsmaterial aus einem Vorlagebehälter zu in ihrer Arbeitsposition befindlichen Hilfsmaterialaufnahmebehältern der in Fig. 13 dargestellten Art;
- Fig. 18: eine schematische Darstellung einer Abführvorrichtung zum Abführen von mit Overspray vermischtem Hilfsmaterial aus den Hilfsmaterialaufnahmebehältern zu einem Sammelbehälter;
- Fig. 19: eine schematische Darstellung eines Filtermoduls und einer stromabwärts des Filtermoduls angeordneten Abluftleitung mit Gebläse sowie verschiedener Vorrichtungen zur Überwachung des Betriebszustands des Gebläses und einer Vorrichtung zum Zuführen von Druckluft zu den Filterelementen, zu einer Aufwirbelungseinheit und zu einem Fluidboden des Filtermoduls;
- Fig. 20: einen schematischen vertikalen Querschnitt durch eine zweite Ausführungsform einer Vorrichtung zum Abtrennen von NasslackOverspray aus einem Overspray-Partikel enthaltenden Abluftstrom, welche geneigte Strömungsleitbleche zum Leiten eines Querluftstroms und einen begehbaren Steg mit geneigter Oberseite zwischen den Filtermodulen umfasst;
- Fig. 21: einen schematischen vertikalen Querschnitt durch eine alternative Ausführungsform eines Hilfsmaterialaufnahmebehälters, welcher mit einem pneumatisch betriebenen Rührwerk zum Durchmischen des im Hilfsmaterialaufnahmebehälter befindlichen Materials und zum Vergleichmäßigen der Vorlage versehen ist;
- Fig. 22: eine schematische Draufsicht von oben auf den Hilfsmaterialaufnahmebehälter mit pneumatisch betriebenem Rührwerk aus Fig. 21;
- Fig. 23: einen schematischen vertikalen Schnitt durch eine weitere alternative Ausführungsform eines Hilfsmaterialaufnahmebehälters, der mit einer elektrisch betriebenen Welle und Paddeln zum Durchmischen des im Hilfsmaterialaufnahmebehälter befindlichen Materials und zum Vergleichmäßigen der Vorlage versehen ist; und
- Fig. 24: eine schematische Draufsicht von oben auf den Hilfsmaterialaufnahmebehälter mit elektrisch betriebener Welle aus Fig. 23.

Gleiche oder funktional äquivalente Elemente sind in allen Figuren mit denselben Bezugszeichen bezeichnet.

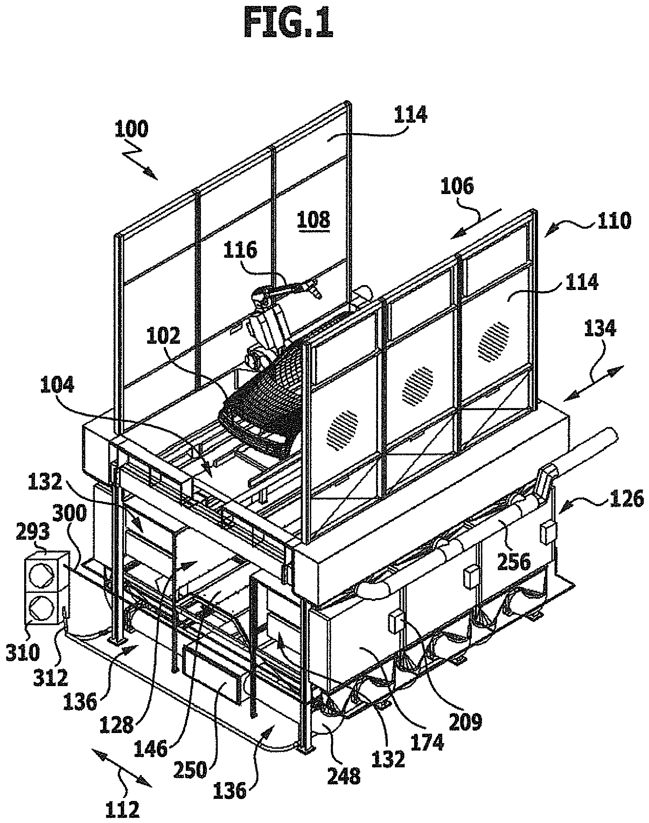

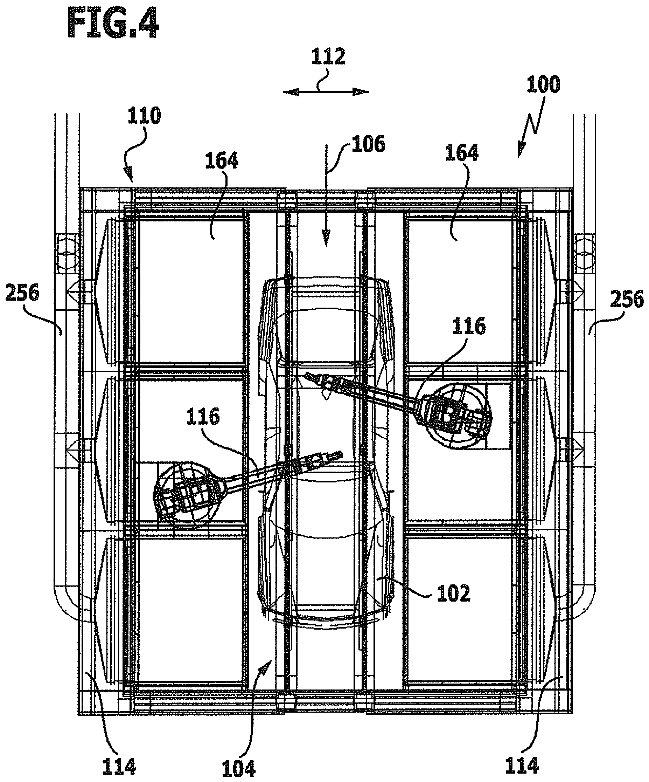

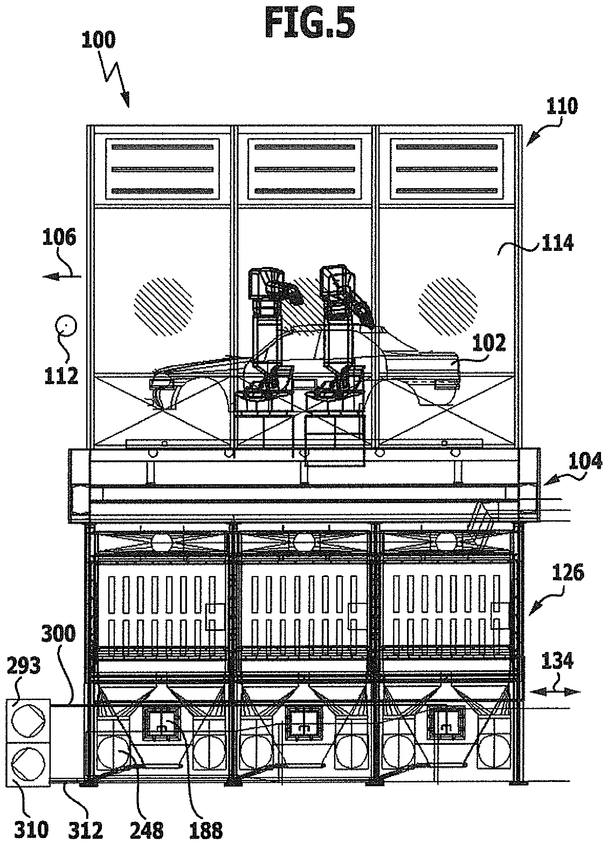

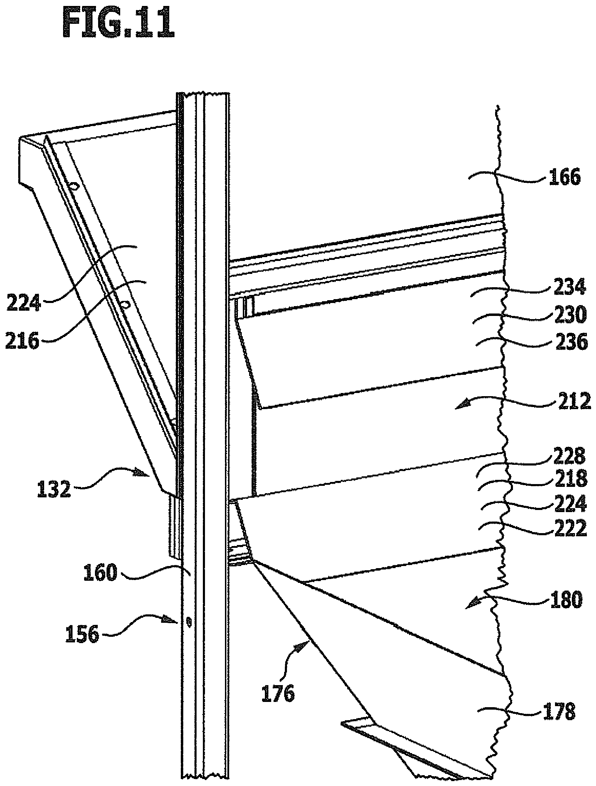

Eine in den Fig. 1 bis 19 dargestellte, als Ganzes mit 100 bezeichnete Anlage zum Spritzlackieren von Fahrzeugkarosserien 102 umfasst eine rein schematisch dargestellte Fördervorrichtung 104, mittels welcher die Fahrzeugkarosserien 102 längs einer Förderrichtung 106 durch einen Applikationsbereich 108 einer als Ganzes mit 110 bezeichneten Lackierkabine bewegt werden können.

Der Applikationsbereich 108 ist der Innenraum der Lackierkabine 110, welche in einer senkrecht zur Förderrichtung 106, die der Längsrichtung der Lackierkabine 110 entspricht, verlaufenden horizontalen Querrichtung 112 zu beiden Seiten der Fördervorrichtung 104 durch jeweils eine Kabinenwand 114 begrenzt ist.

Zu beiden Seiten der Fördervorrichtung 104 sind in der Lackierkabine 110 Spritzlackiereinrichtungen 116, beispielsweise in Form von Lackierrobotern, angeordnet.

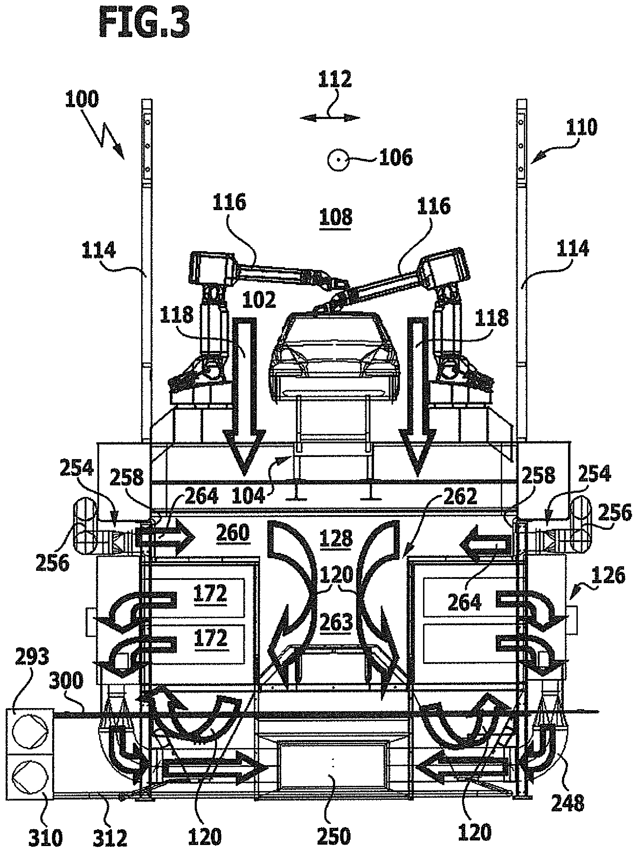

Mittels eines (nur ausschnittsweise dargestellten) Umluftkreislaufs wird ein Luftstrom erzeugt, welcher den Applikationsbereich 108 im Wesentlichen vertikal von oben nach unten durchsetzt, wie dies in Fig. 3 durch die Pfeile 118 angedeutet ist.

Dieser Luftstrom nimmt im Applikationsbereich 108 Lack-Overspray in Form von Overspray-Partikeln auf. Der Begriff "Partikel" umfasst dabei sowohl feste als auch flüssige Teilchen, insbesondere Tröpfchen.

Bei Verwendung von Nasslack besteht der Nasslack-Overspray aus Lacktröpfchen. Die meisten der Overspray-Partikel weisen eine größte Abmessung im Bereich von ungefähr 1 µm bis ungefähr 100 µm auf.

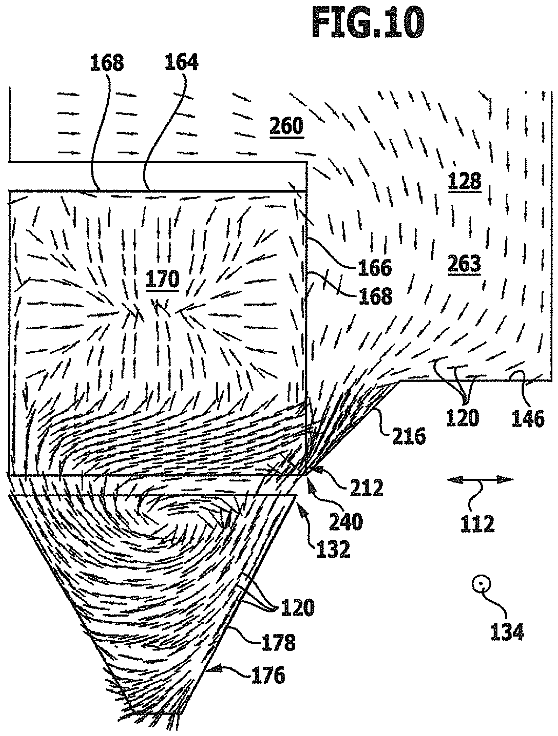

Der mit den Overspray-Partikeln aus dem Applikationsbereich 108 beladene Abluftstrom wird im Folgenden als Rohgasstrom bezeichnet. Die Strömungsrichtung des Rohgasstroms ist in den Fig. 3 und 10 durch Pfeile 120 dargestellt.

Der Rohgasstrom verlässt die Lackierkabine 110 nach unten und gelangt in eine als Ganzes mit 126 bezeichnete Vorrichtung zum Abtrennen von Nasslack-Overspray aus dem Rohgasstrom, welche unterhalb des Applikationsbereichs 108 angeordnet ist.

Die Vorrichtung 126 umfasst eine im Wesentlichen quaderförmige Strömungskammer 128, welche sich in der Förderrichtung 106 über die ganze Länge der Lackierkabine 110 hinweg erstreckt und in der Querrichtung 112 durch vertikale Seitenwände 130 begrenzt ist, die im Wesentlichen mit den seitlichen Kabinenwänden 114 der Lackierkabine 110 fluchten, so dass die Strömungskammer 128 im Wesentlichen dieselbe horizontale Querschnittsfläche aufweist wie die Lackierkabine 110 und im Wesentlichen vollständig innerhalb der vertikalen Projektion der Grundfläche der Lackierkabine 110 angeordnet ist.

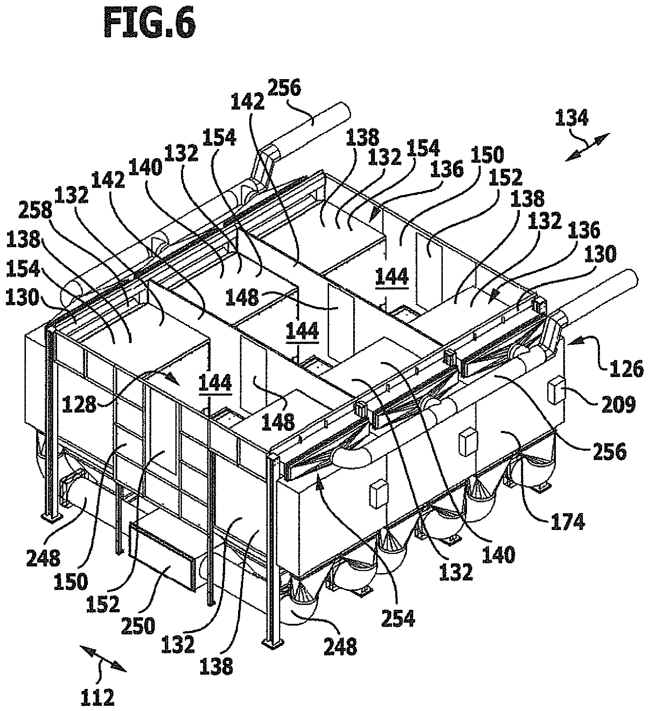

Wie am besten aus Fig. 6 zu ersehen ist, sind auf beiden Seiten der Strömungskammer 128 jeweils mehrere, beispielsweise drei, Filtermodule 132 angeordnet, welche zwei sich in der Längsrichtung 134 (welche mit der Förderrichtung 106 übereinstimmt) der Vorrichtung 126 zum Abtrennen von Nasslack-Overspray erstreckende Modulreihen 136 bilden.

Jede der Modulreihen 136 umfasst zwei Eckmodule 138, welche jeweils ein Ende einer Modulreihe 136 bilden, und mindestens ein zwischen zwei benachbarten Filtermodulen 132 angeordnetes Mittelmodul 140.

Zur Vermeidung von Längsströmungen des Rohgasstroms in der Längsrichtung 134 der Strömungskammer 128 und zur Vermeidung von Strömungen des Rohgases zwischen den einzelnen Filtermodulen 132 können sich in der Querrichtung 112 erstreckende vertikale Quertrennwände 142 vorgesehen sein, welche zwischen jeweils zwei in der Längsrichtung 134 aufeinanderfolgenden Filtermodulen 132 angeordnet sind und die Strömungskammer 128 in längs der Längsrichtung 134 aufeinanderfolgende Strömungskammerabschnitte 144 unterteilen.

Durch diese Quertrennwände 142 ist eine definierte Einstellung der Rohgasströmung für jedes einzelne Filtermodul 132 unabhängig von der Rohgasströmung durch die anderen Filtermodule 132 möglich.

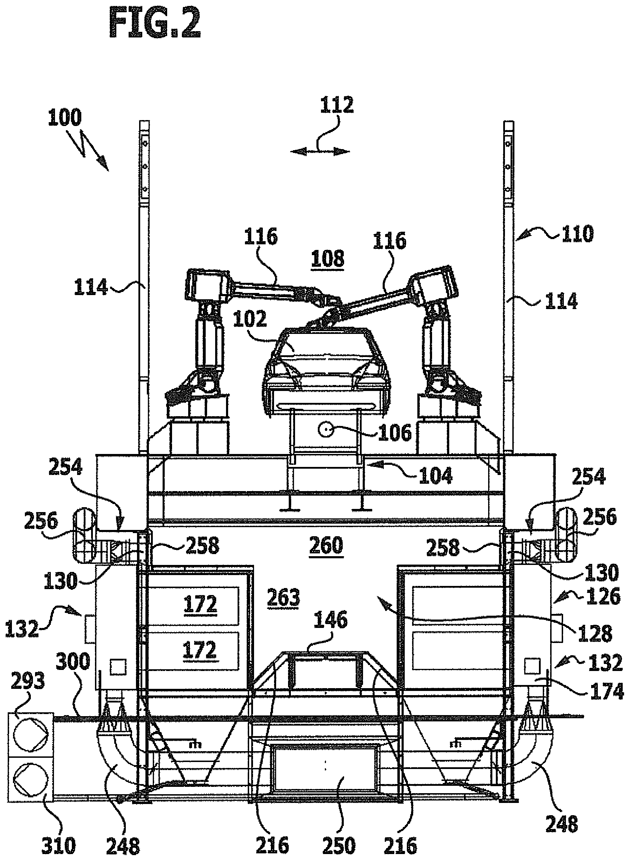

Wie am besten aus Fig. 2 zu ersehen ist, ist zwischen den beiden Modulreihen 136 ein von einer Bedienungsperson begehbarer Steg 146 vorgesehen.

Um die Abschnitte des Stegs 146, welche in den aufeinanderfolgenden Strömungskammerabschnitten 144 angeordnet sind, durchgehend begehen zu können, sind in den Quertrennwänden 142 Durchgangstüren 148 vorgesehen (Fig. 6).

Die die Strömungskammer 128 an ihrem vorderen Ende bzw. an ihrem hinteren Ende abschließenden Stirnwände 150 der Strömungskammer 128 sind mit Zugangstüren 152 versehen, durch welche eine Bedienungsperson von außen in die Strömungskammer 128 gelangen kann.

Jedes der Filtermodule 132 ist als eine vormontierte Einheit 154 ausgebildet, die an einem vom Montageort der Lackieranlage entfernten Ort hergestellt und als Einheit zum Montageort der Lackieranlage transportiert wird. Am Montageort wird die vormontierte Einheit 154 in der vorgesehenen Arbeitsposition angeordnet und mit einer oder mehreren benachbarten vormontierten Einheiten 154 oder mit den dazwischen angeordneten Quertrennwänden 142 sowie mit einer Tragekonstruktion des Applikationsbereichs 108 verbunden.

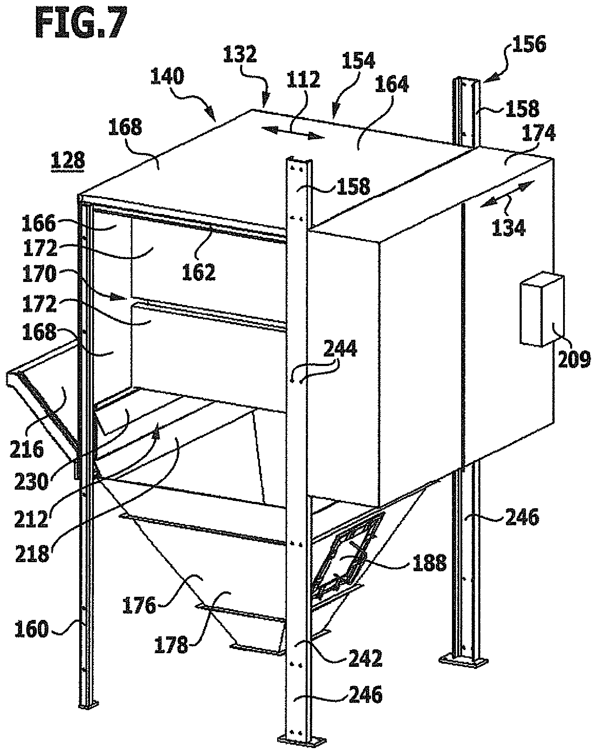

Der Aufbau eines Filtermoduls 132 wird am Beispiel eines Mittelmoduls 140 im Folgenden unter Bezugnahme auf die Fig. 7 und 9 bis 16 beschrieben:
Das Modul umfasst eine Tragekonstruktion 156 aus zwei vertikalen hinteren Stützen 158 und zwei vertikalen vorderen Stützen 160, welche an ihrem oberen Ende über horizontale Querstreben 162 mit jeweils einer der hinteren Stützen 158 verbunden sind (Fig. 7).

Ferner sind die vorderen Stützen 160 an ihren oberen Enden mittels einer weiteren (nicht dargestellten) Querstrebe miteinander verbunden.

Auch die hinteren Stützen 158 sind mittels (nicht dargestellter) Querstreben oder mittels eines (nicht dargestellten) Verbindungsrahmens miteinander verbunden.

Die Querstreben am oberen Ende der Tragekonstruktion 156 tragen eine horizontale Deckenwand 164.

An den Vorderseiten der vorderen Stützen 160 ist eine vertikale Vorderwand 166 des Filtermoduls 132 gehalten.

Die Deckenwand 164 und die Vorderwand 166 bilden Trennwände 168 des Filtermoduls 132, welche einen innerhalb des Filtermoduls 132 angeordneten Filterelementaufnahmeraum 170 von dem außerhalb des Filtermoduls 132 befindlichen Bereich der Strömungskammer 128 trennen.

In dem Filterelementaufnahmeraum 170 des Filtermoduls 132 sind mehrere, beispielsweise zehn, Filterelemente 172 in zwei Reihen übereinander angeordnet, welche von einem gemeinsamen Grundkörper 174, der an den Rückseiten der hinteren Stützen 158 gehalten ist, in horizontaler Richtung abstehen.

Die Filterelemente 172 können beispielsweise aus Platten aus gesintertem Polyethylen, die an ihrer Außenfläche mit einer Membran aus Polytetrafluorethylen (PTFE) versehen sind, ausgebildet sein.

Die Beschichtung aus PTFE dient dazu, die Filterklasse der Filterelemente 172 zu erhöhen (d.h. deren Durchlässigkeit zu verringern) und ferner das permanente Anhaften des aus dem Rohgasstrom abgetrennten Nasslack-Oversprays zu verhindern.

Sowohl das Grundmaterial der Filterelemente 172 als auch deren PTFE-Beschichtung weisen eine Porosität auf, so dass das Rohgas durch die Poren in den Innenraum des jeweiligen Filterelements 172 gelangen kann.

Um das Verkleben der Filteroberflächen zu verhindern, sind dieselben ferner mit einer Sperrschicht aus in den Rohgasstrom abgegebenem Hilfsmaterial versehen. Dieses vorzugsweise partikelförmige Hilfsmaterial wird üblicherweise auch als "Precoat"-Material bezeichnet.

Die Sperrschicht bildet sich im Betrieb der Vorrichtung 126 durch Abscheidung des in den Rohgasstrom 120 abgegebenen Hilfsmaterials an den Filteroberflächen und verhindert, dass die Filteroberflächen durch anhaftenden Nasslack-Overspray verkleben.

Hilfsmaterial aus dem Rohgasstrom 120 setzt sich auch an den Innenseiten der Deckenwand 164 und der Vorderwand 166 des Filtermoduls 132 ab, wo es ebenfalls ein Anhaften von Nasslack-Overspray verhindert.

Als Hilfsmaterial kann grundsätzlich jedes Medium verwendet werden, welches dazu in der Lage ist, den Flüssigkeitsanteil des Nasslack-Oversprays aufzunehmen.

Insbesondere kommen als Hilfsmaterialien beispielsweise Kalk, Steinmehl, Aluminiumsilikate, Aluminiumoxide, Siliziumoxide, Pulverlack oder ähnliches in Betracht.

Alternativ oder ergänzend hierzu können als Hilfsmaterial zur Aufnahme und/oder Bindung des Oversprays auch Partikel mit einer Hohlraumstruktur und relativ zu ihren Außenabmessungen großer innerer Oberfläche verwendet werden, beispielsweise Zeolithe oder andere hohle, beispielsweise kugelförmige Körper aus Polymeren, Glas oder Aluminiumsilikat und/oder natürliche oder synthetisch erzeugte Fasern.

Alternativ oder ergänzend hierzu können als Hilfsmaterial zur Aufnahme und/oder Bindung des Oversprays auch chemisch mit dem Overspray reagierende Partikel verwendet werden, beispielsweise chemisch reaktive Partikel aus Amin-, Epoxid-, Carboxyl-, Hydroxyl- oder Isocyanatgruppen, chemisch reaktive Partikel aus mit Octylsilan nachbehandeltem Aluminiumoxid oder feste oder flüssige Mono-, Oligo- oder Polymere, Silane, Silanole oder Siloxane.

Das Hilfsmaterial besteht vorzugsweise aus einer Vielzahl von Hilfsmaterial-Partikeln, welche einen mittleren Durchmesser im Bereich von beispielsweise ungefähr 10 µm bis ungefähr 100 µm aufweisen.

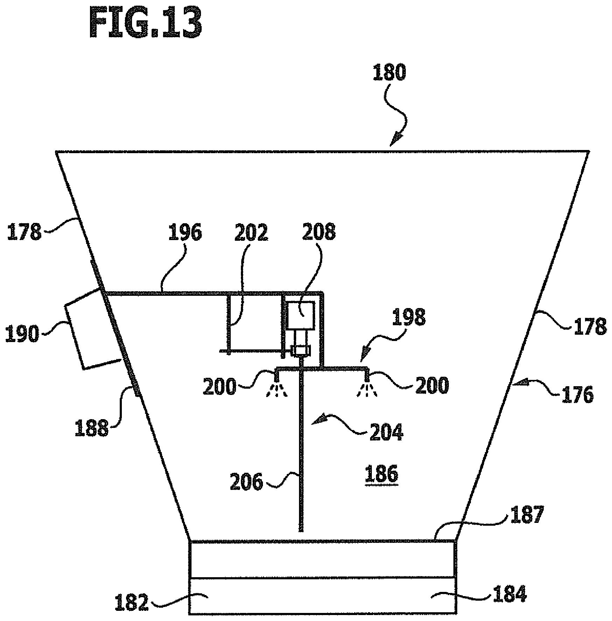

Um das Hilfsmaterial dem Rohgasstrom zugeben zu können, ohne dass die Gefahr besteht, dass das Hilfsmaterial in den Applikationsbereich 108 der Lackieranlage 100 gelangt, ist jedes Filtermodul 132 mit einem an der Tragekonstruktion 156 gehaltenen Hilfsmaterialaufnahmebehälter 176 versehen, welcher beispielsweise eine trichterförmige Gestalt in Form eines umgekehrten Pyramidenstumpfes aufweist (Fig. 13).

Die vier trapezförmigen Seitenwände 178 des Hilfsmaterialaufnahmebehälters 176 sind gegenüber der Vertikalen in einem Winkel von mindestens ungefähr 60° geneigt.

Die Höhe des Hilfsmaterialaufnahmebehälters 176 beträgt beispielsweise ungefähr 1,1 m.

Die oberen Ränder der Seitenwände 178 umschließen eine Zugangsöffnung 180 des Hilfsmaterialaufnahmebehälters 176, durch welche der mit Overspray beladene Rohgasstrom 120 in den Hilfsmaterialaufnahmebehälter 176 eintreten und aus demselben wieder entweichen kann.

Der im Wesentlichen horizontal ausgerichtete Boden 182 ist als ein poröser Fluidboden 184 ausgebildet, der mit einem gasförmigen Medium, insbesondere mit Druckluft, durchspülbar ist, um das im Innenraum 186 des Hilfsmaterialaufnahmebehälters 176 angeordnete Hilfsmaterial zu fluidisieren und lokal unterschiedliche Füllhöhen des Hilfsmaterials innerhalb des Hilfsmaterialaufnahmebehälters 176 zu egalisieren.

Während des Betriebs der Anlage 100 wird der Fluidboden intermittierend, beispielsweise dreimal pro Minute für jeweils ungefähr zwei Sekunden, in Betrieb genommen.

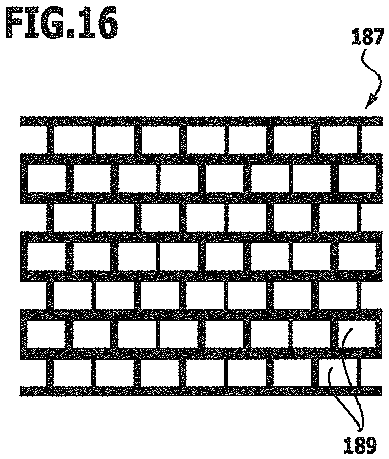

Um zu verhindern, dass der Fluidboden 184 durch herabfallende größere Gegenstände beschädigt wird, ist in einem Abstand von beispielsweise 20 cm über dem Fluidboden 184 ein Auffanggitter oder Rückhaltegitter 187 angeordnet, welches sich in horizontaler Richtung über den gesamten Querschnitt des Innenraums 186 des Hilfsmaterialaufnahmebehälters 176 erstreckt und eine Vielzahl von Reihen waben- oder rechteckförmiger Durchtrittsöffnungen 189 für den Durchtritt von Hilfsmaterial durch das Rückhaltegitter 187 aufweist. Die Durchtrittsöffnungen sind von Reihe zu Reihe versetzt zueinander angeordnet und weisen eine Größe von beispielsweise ungefähr 30 mm x 30 mm auf (Fig. 16).

Um den Zugang zu dem Innenraum 186 des Hilfsmaterialaufnahmebehälters 176 für Wartungszwecke zu ermöglichen, ist eine der Seitenwände 178 mit einer Revisionsöffnung versehen, welche im Betrieb des Filtermoduls 132 durch eine Revisionstür 188 mit einem Handgriff 190 verschlossen ist (siehe die Fig. 13 bis 15).

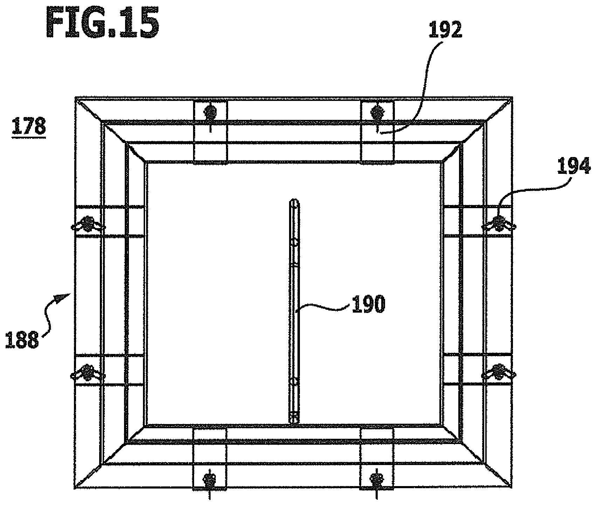

Wie aus Fig. 15 zu ersehen ist, ist die Revisionstür 188 mittels Klemmen 192 mit Flügelmuttern 194 an der zugeordneten Seitenwand 178 des Hilfsmaterialaufnahmebehälters 176 lösbar gehalten.

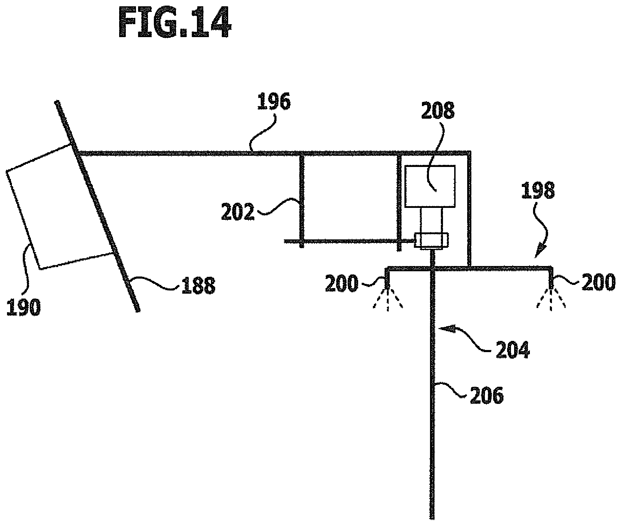

An der Revisionstür 188 ist eine Druckluftrohrleitung 196 gehalten, welche zu einer Aufwirbelungseinrichtung 198 führt (Fig. 14).

Die Aufwirbelungseinrichtung 198 dient dazu, Druckluftimpulse in das darunter befindliche Hilfsmaterial abzugeben, um dieses Hilfsmaterial aufzuwirbeln und so in den durch den Hilfsmaterialaufnahmebehälter 176 hindurchgeführten Rohgasstrom einzubringen.

Außerdem wird durch die Aufwirbelung des Hilfsmaterials mittels der Aufwirbelungseinrichtung 198 eine Homogenisierung der in dem Hilfsmaterialaufnahmebehälter 176 vorhandenen Mischung aus Hilfsmaterial und daran gebundenem Overspray erzielt.

Während des Betriebs der Anlage 100 wird die Aufwirbelungseinrichtung 198 intermittierend, beispielsweise viermal pro Minute für jeweils ungefähr 5 Sekunden, in Betrieb genommen.

Die Aufwirbelungseinrichtung 198 umfasst mehrere, beispielsweise zwei, Austrittsdüsen 200 für Druckluft, welche als Kegeldüsen ausgebildet sind und jeweils einen sich nach unten zu dem Boden 182 des Hilfsmaterialaufnahmebehälters 176 hin erweiternden Druckluftkegel erzeugen können.

Vorzugsweise sind die Austrittsdüsen 200 so ausgebildet und angeordnet, dass die von den Austrittsdüsen 200 erzeugten Druckluftkegel gemeinsam die Bodenfläche des Hilfsmaterialaufnahmebehälters 176 vollständig überstreichen. Ferner ist an der Druckluftrohrleitung 196 eine Halterung 202 für einen Füllstandssensor 204 angeordnet, welcher ein stabförmiges Sensorelement 206 und ein Sensorgehäuse 208 mit darin untergebrachter Sensorelektronik umfasst (Fig. 14).

Der Füllstandssensor 204 ist als ein analoger, insbesondere kapazitiver, Sensor ausgebildet und dient dazu, ein Signal zu erzeugen, das jeweils einem Wert aus einer Vielzahl diskreter Füllstandshöhen oder aus einem Kontinuum von Füllstandshöhen entspricht, um den Füllstand des Hilfsmaterials in dem Hilfsmaterialaufnahmebehälter 176 möglichst genau ermitteln zu können.

Das stabförmige Sensorelement 206 des Füllstandssensors 204 ist im Wesentlichen vertikal ausgerichtet und möglichst weit von den Seitenwänden 178 des Hilfsmaterialaufnahmebehälters 176 in der Nähe der Mitte des Innenraums 186 des Hilfsmaterialaufnahmebehälters 176 angeordnet, um das Messergebnis des Füllstandssensors 204 möglichst wenig durch Randeffekte zu beeinträchtigen (Fig. 13).

Das stabförmige Sensorelement 206 des Füllstandssensors 204 ist im Wesentlichen senkrecht zu dem horizontalen Boden 182 des Hilfsmaterialaufnahmebehälters 176 ausgerichtet.

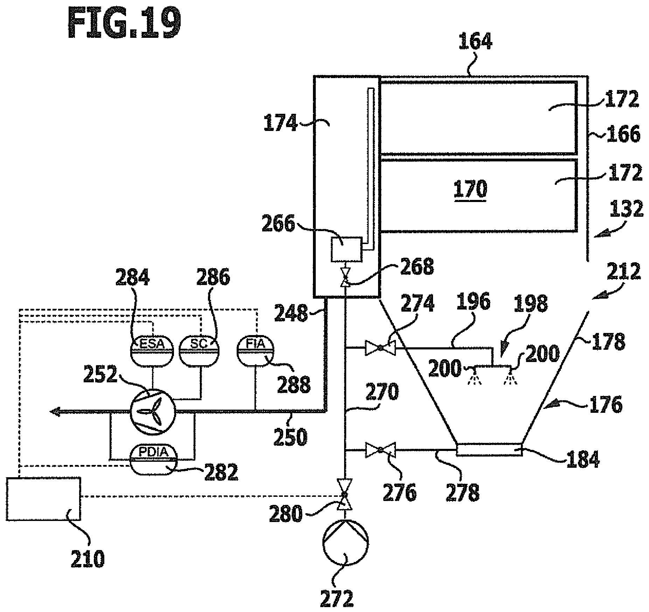

Das Signal, das von dem Füllstandssensor 204 erzeugt wird, wird über eine (nicht dargestellte) Signalleitung an einen elektrischen Anschlusskasten 209 des Filtermoduls 132, der an dem Grundkörper 174 der Filterelemente 172 angeordnet ist (siehe Fig. 7), und von dort an eine Steuervorrichtung der Anlage 100, die in Fig. 19 schematisch dargestellt und mit 210 bezeichnet ist, übermittelt.

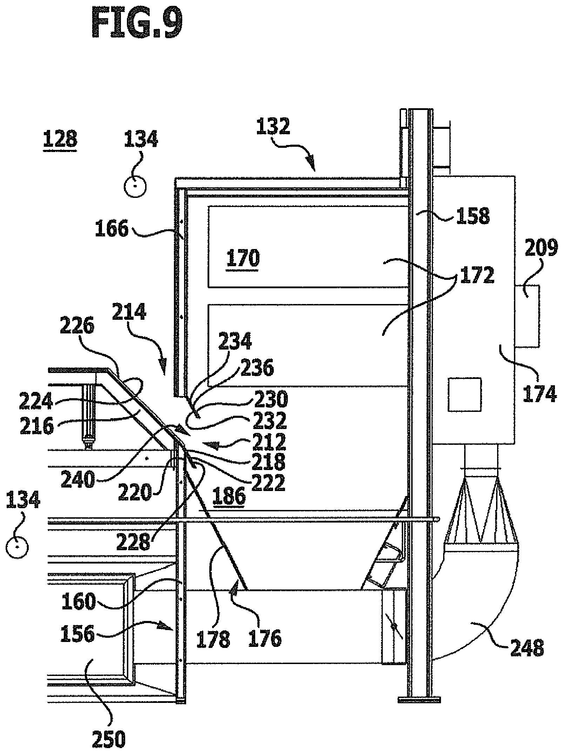

Um die in das Filtermodul 132 eintretende Rohgasströmung gezielt in den Innenraum 186 des Hilfsmaterialaufnahmebehälters 176 hinein zu lenken und einen direkten Zutritt der Rohgasströmung aus der Strömungskammer 128 zu den Filterelementen 172 hin zu verhindern, ist jedes Filtermodul 132 ferner mit einer schlitzförmigen Einlassöffnung 212 versehen, die als ein Einlasskanal 214 ausgebildet ist, der beispielsweise, wie insbesondere aus Fig. 9 zu ersehen ist, einen sich in der Strömungsrichtung des Rohgasstroms bis zu einer Engstelle 240 verengenden durchströmbaren Querschnitt aufweist.

Alternativ oder ergänzend hierzu kann auch vorgesehen sein, dass der Einlasskanal 214 einen sich in der Strömungsrichtung des Rohgasstroms von einer Engstelle 240 aus erweiternden durchströmbaren Querschnitt aufweist.

Der Einlasskanal 214 wird nach unten hin durch eine Einlaufschräge 216, welche sich von den vorderen Stützen 160 der Tragekonstruktion 156 aus unter einem Winkel von beispielsweise ungefähr 40° bis ungefähr 65° gegenüber der Horizontalen geneigt schräg nach oben erstreckt, und durch ein sich an das untere Ende der Einlaufschräge 216 angrenzendes unteres Leitblech 218 begrenzt, welches stärker gegen die Horizontale geneigt ist als die Einlaufschräge 216, beispielsweise unter einem Winkel von ungefähr 55° bis ungefähr 70°, und welches über einen oberen, im Wesentlichen vertikal ausgerichteten Abschnitt 220 einer Seitenwand 178 des Hilfsmaterialaufnahmebehälters 176 hinaus vorsteht und in den Innenraum 186 des Hilfsmaterialaufnahmebehälters 176 hineinragt.

Auf diese Weise wirkt das untere Leitblech 218 als ein Rückhalteelement 222, welches Hilfsmaterial aus dem Hilfsmaterialaufnahmebehälter 176 von der Einlassöffnung 212 fernhält und verhindert, dass aufgewirbeltes Hilfsmaterial auf der Seite der Einlassöffnung 212 entlang der Seitenwand 178 aus dem Hilfsmaterialaufnahmebehälter 176 hinaus gelangt.

Außerdem verhindert das untere Leitblech 218 ein Abreißen der Rohgasströmung nach dem Passieren der Einlaufschräge 216 und gewährleistet eine gerichtete Rohgasströmung in den Hilfsmaterialaufnahmebehälter 176 hinein. Das untere Leitblech 218 weist eine Tiefe (d.h. eine Ausdehnung in der Strömungsrichtung des Rohgasstroms) von beispielsweise ungefähr 100 mm auf.

Die Einlaufschräge 216 und das untere Leitblech 218 erstrecken sich in der Längsrichtung 134 der Strömungskammer 128 über im Wesentlichen die gesamte Länge der Einlassöffnung 212 von beispielsweise ungefähr 1 m bis ungefähr 2 m, welche nahezu der Ausdehnung des gesamten Filtermoduls 132 in der Längsrichtung 134 entspricht.

Die Oberseite der Einlaufschräge 216 und die Oberseite des unteren Leitblechs 218 bilden zusammen eine untere Leitfläche 224 der Einlassöffnung 212, welche die Einlassöffnung 212 nach unten begrenzt und in ihrem oberen Abschnitt 226, der durch die Einlaufschräge 216 gebildet ist, gegenüber der Horizontalen eine Neigung von ungefähr 40° bis ungefähr 65° aufweist und in ihrem unteren Abschnitt 228, der durch das untere Leitblech 218 gebildet ist, eine stärkere Neigung gegenüber der Horizontalen von ungefähr 55° bis ungefähr 70° aufweist.

Nach oben hin wird die Einlassöffnung 212 durch den unteren Rand der Vorderwand 166 und durch ein von dem unteren Rand der Vorderwand 166 schräg nach unten in den Innenraum des Filtermoduls 132 abstehendes oberes Leitblech 230 begrenzt.

Das obere Leitblech 230 ist ebenso wie das untere Leitblech 218 unter einem Winkel von beispielsweise ungefähr 55° bis ungefähr 70° gegen die Horizontale geneigt und erstreckt sich in der Längsrichtung 134 über im Wesentlichen die gesamte Breite der Einlassöffnung 212 von beispielsweise 1 m oder 2 m.

Das obere Leitblech 230 weist eine Tiefe (d.h. eine Ausdehnung längs der Strömungsrichtung des Rohgasstroms) von beispielsweise ungefähr 150 mm auf.

Die untere Seite des oberen Leitblechs 230 bildet eine obere Leitfläche 232, welche die Einlassöffnung 212 nach oben begrenzt und unter einem Winkel von beispielsweise ungefähr 55° bis ungefähr 70° gegen die Horizontale geneigt ist.

Durch diese obere Leitfläche 232 für den Rohgasstrom wird erreicht, dass die Rohgasströmung nicht an der Vorderwand 166 des Filtermoduls 132 abreißt, sondern direkt in den Hilfsmaterialaufnahmebehälter 176 hinein gelenkt wird.

Das obere Leitblech 230 dient ferner als ein Filterabschirmelement 234, da es so ausgebildet und an der Einlassöffnung 212 angeordnet ist, dass es verhindert, dass das in das Filtermodul 132 eintretende Rohgas direkt zu den Filterelementen 172 strömt.

Ferner dient das obere Leitblech 230 als ein Abweiselement 236, welches von den Filterelementen 170 abgereinigtes Material, welches Hilfsmaterial und an das Hilfsmaterial gebundene Overspray-Partikel enthält, von der Einlassöffnung 212 fernhält.

Von den Filterelementen 172 auf die Oberseite des oberen Leitblechs 230 herabfallendes Material wird vielmehr durch die Schrägstellung des oberen Leitblechs 230 in den Hilfsmaterialaufnahmebehälter 176 gelenkt.

Im Betrieb des Filtermoduls 132 sind sowohl die obere Leitfläche 232 als auch die Oberseite des oberen Leitblechs 230 mit einer Beschichtung aus dem Hilfsmaterial versehen, so dass diese Flächen des oberen Leitblechs 230 leicht zu reinigen sind und kein Overspray direkt an dem oberen Leitblech 230 anklebt.

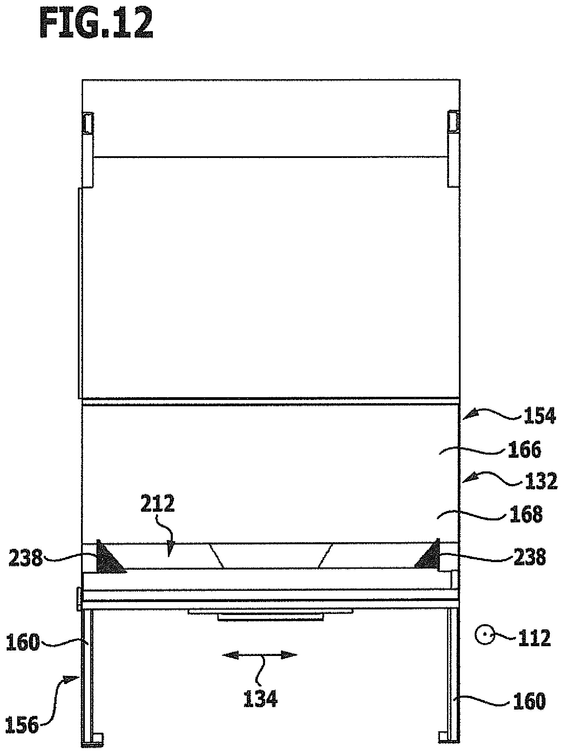

Wie am besten aus Fig. 12 zu ersehen ist, umfasst das Filtermodul 132 ferner zwei Abdeckelemente 238 in Form ungefähr dreieckiger Abdeckbleche, welche den linken und den rechten unteren Eckbereich der Einlassöffnung 212 so abdecken, dass Hilfsmaterial und Overspray aus dem Rohgasstrom von diesen Eckbereichen der Einlassöffnung 212 ferngehalten werden und Ablagerungen von Hilfsmaterial und von Overspray-Partikeln in diesen Eckbereichen und außerhalb des Filtermoduls 132 auf der Einlaufschräge 216 verhindert werden.

Die Oberseiten der Abdeckelemente 238 sind schräg zur Vertikalen und schräg zur Horizontalen ausgerichtet und weisen jeweils eine Oberflächennormale auf, welche in den Außenraum des Filtermoduls 132 nach oben gerichtet ist.

Durch die vorstehend beschriebene Ausgestaltung der Geometrie der Einlassöffnung 212 wird erreicht, dass die Einlassöffnung 212 eine Engstelle 240 aufweist, an welcher der durchströmbare Querschnitt der Einlassöffnung 212 am kleinsten und daher die Rohgasgeschwindigkeit am größten ist.

Vorzugsweise beträgt die Rohgasgeschwindigkeit in der Engstelle von ungefähr 2 m/s bis ungefähr 8 m/s, insbesondere von ungefähr 3 m/s bis ungefähr 5 m/s.

Auf diese Weise wird wirksam verhindert, dass Hilfsmaterial aus dem Inneren des Filtermoduls 132, welches eine geschlossene Box bildet, in die Strömungskammer 128 und von dort in den Applikationsbereich 108 gelangt. Die Aufwirbelung des Hilfsmaterials im Hilfsmaterialaufnahmebehälter 176 und die Abreinigung der Filterelemente 172 können daher zu jedem beliebigen Zeitpunkt erfolgen, ohne die Zufuhr von Rohgas zum Filtermodul 132 oder gar den Betrieb der Spritzlackiereinrichtungen 116 im Applikationsbereich 108 unterbrechen zu müssen.

Ferner ist dadurch, dass der Rohgasstrom in den Hilfsmaterialaufnahmebehälter 176 gerichtet aus der Einlassöffnung 212 austritt, gewährleistet, dass eine Umlenkung des Rohgasstroms im Innenraum 186 des Hilfsmaterialaufnahmebehälters 176 erfolgt. Dadurch wird eine ausreichende Menge von Hilfsmaterial, die durch das Aufwirbeln aus der im Hilfsmaterialaufnahmebehälter 176 befindlichen Vorlage erzeugt wird, durch den Rohgasstrom mitgerissen.

Die Rohgasströmung aus der Strömungskammer 128 durch die Einlassöffnung 212 in den Innenraum des Filtermoduls 132 ist in Fig. 10 als Ergebnis einer Strömungssimulation dargestellt. Hieraus ist deutlich zu ersehen, dass sich im Innenraum des Filtermoduls 132 eine Strömungswalze ausbildet, deren horizontal verlaufende Achse etwas tiefer liegt als der obere Rand des Hilfsmaterialaufnahmebehälters 176.

Auf der der Einlassöffnung 212 gegenüberliegenden Seite des Hilfsmaterialaufnahmebehälters 176 strömt die mit Hilfsmaterial beladene Rohgasströmung wieder aus dem Hilfsmaterialaufnahmebehälter 176 heraus und verteilt sich dann über die gesamte Tiefe des Filterelementaufnahmeraums 170, so dass eine Verwirbelung um die Filterelemente 172 ausgebildet wird und aufgrund der hohen Dynamik, die der Rohgasstrom in der Engstelle 240 erhalten hat, eine homogene Verteilung des Hilfsmaterials auf die einzelnen Filterelemente 172 gewährleistet ist.

Da sich kaum Bauteile des Filtermoduls 132 im Strömungsweg des ankommenden Rohgasstroms befinden, wird eine Verschmutzung von Bauteilen durch klebrigen Lack weitgehend verhindert und trotzdem eine für die Filtrierung günstige Anströmung der Filterelemente 172 erhalten.

Dadurch, dass die mittlere Strömungsrichtung des durch die Engstelle 240 in das Filtermodul 132 eintretenden Rohgasstroms unter einem Winkel von mehr als 40° gegen die Horizontale geneigt ist, wird verhindert, dass sich im unteren Bereich des Filterelementaufnahmeraums 170 eine Luftschleuse ausbildet, welche von den Filterelementen 172 abgereinigtes Material sofort wieder zu den Filterelementen 172 zurück befördern würde und zur Ausbildung einander entgegengesetzter Luftwirbel innerhalb des Filtermoduls 132 führen könnte. Um zwei in einer Modulreihe 136 nebeneinander angeordnete Filtermodule 132 in einfacher Weise und stabil miteinander verbinden zu können oder um ein Filtermodul 132 mit einer angrenzenden Quertrennwand 142 verbinden zu können, umfasst die Tragekonstruktion 156 jedes Filtermoduls 132 mindestens eine hintere Stütze 158, die eine vertikal und in der Querrichtung 112 ausgerichtete, im Wesentlichen ebene Anlagefläche 242 aufweist, welche an eine entsprechende Anlagefläche 242 eines benachbarten Filtermoduls 132 oder an eine benachbarte Quertrennwand 142 angelegt werden kann (Fig. 7).

In der Anlagefläche 242 sind ferner Durchtrittsöffnungen 244 für den Durchtritt von Befestigungsmitteln vorgesehen, mittels welcher die als Verbindungselement 246 dienende hintere Stütze 158 mit einem Verbindungselement 246 eines benachbarten Filtermoduls 132 oder mit einer benachbarten Quertrennwand 142 verbindbar ist.

Die als Verbindungselement 246 dienende hintere Stütze 158 weist vorzugsweise ein ungefähr U-förmiges Profil auf.

Wie aus Fig. 7 zu ersehen ist, weist jedes Mittelmodul 140 zwei als Verbindungselemente 246 dienende hintere Stützen 158 mit U-förmigen Profilen auf, deren offene Seiten einander zugewandt sind, damit das Mittelmodul 140 auf beiden Seiten mit einem angrenzenden weiteren Filtermodul 132 oder mit einer Quertrennwand 142 verbindbar ist.

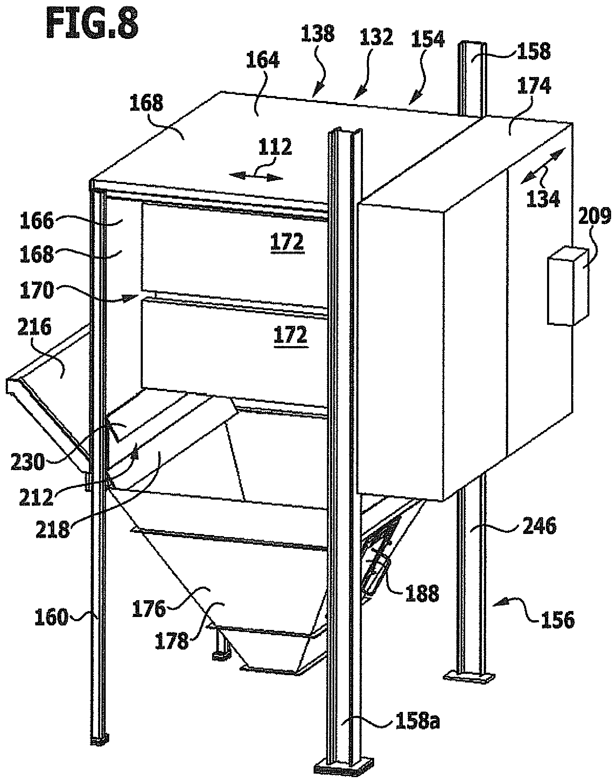

Wie aus Fig. 8 zu ersehen ist, weist jedes Eckmodul 138 nur eine als Verbindungselement 246 ausgebildete hintere Stütze 158 mit U-förmigem Profil auf; die gegenüberliegende hintere Stütze 158a, welche weder mit einem benachbarten Filtermodul 132 noch mit einer benachbarten Quertrennwand 142 verbunden werden muss, kann zur Erhöhung ihrer mechanischen Festigkeit statt eines U-förmigen Profils beispielsweise ein T-förmiges Profil aufweisen.

Im Übrigen stimmen die Eckmodule 138 hinsichtlich Aufbau und Funktion mit den vorstehend im Detail beschriebenen Mittelmodulen 140 überein.

Im Betrieb jedes Filtermoduls 132 überstreicht der Rohgasstrom 120 die Filteroberflächen der Filterelemente 172, wobei sowohl das mitgeführte Hilfsmaterial als auch der mitgeführte Nasslack-Overspray an den Filteroberflächen abgeschieden werden, und das gefilterte Rohgas gelangt als Abluftstrom durch die porösen Filteroberflächen in die Innenräume der Filterelemente 172, die mit einem Hohlraum innerhalb des Grundkörpers 174, von dem die Filterelemente 172 abstehen, verbunden sind. Von diesem Hohlraum gelangt der gereinigte Abluftstrom in jeweils ein Abluftrohr 248, welches von dem Grundkörper 174 der Filterelemente 172 jedes Filtermoduls 132 zu einem ungefähr mittig unter der Strömungskammer 128 angeordneten und parallel zur Längsrichtung 134 der Strömungskammer 128 verlaufenden Abluftkanal 250 führt (siehe insbesondere die Fig. 2 und 3).

Wie aus der schematischen Darstellung der Fig. 19 zu ersehen ist, gelangt die von dem Nasslack-Overspray gereinigte Abluft aus dem Abluftkanal 250 zu einem Abluftgebläse 252, von wo die gereinigte Abluft über ein (nicht dargestelltes) Kühlregister und eine (nicht dargestellte) Zuführleitung einer oberhalb des Applikationsbereichs 108 angeordneten (nicht dargestellten) Luftkammer, dem sogenannten Plenum, zugeführt wird.

Von dieser Luftkammer gelangt die gereinigte Abluft über eine Filterdecke in den Applikationsbereich 108 zurück.

Von der Zuführleitung zweigt eine (nicht dargestellte) Abluftleitung ab, durch welche ein Teil des gereinigten Abluftstroms (beispielsweise über einen Kamin) an die Umgebung abgegeben wird.

Dieser an die Umgebung abgegebene Teil des Abluftstroms wird durch Frischluft ersetzt, welche in die Strömungskammer 128 über zwei Luftschleiererzeugungsvorrichtungen 254 eingespeist wird, die über jeweils eine Zuluftleitung 256 mit einer (nicht dargestellten) Zuluftanlage verbunden sind (Fig. 1 bis 3).

Jede der Luftschleiererzeugungsvorrichtungen 254 umfasst jeweils eine sich in der Längsrichtung 134 der Strömungskammer 128 erstreckende Zuluftkammer, die über die Zuluftleitung 256 mit Zuluft gespeist wird und über einen Spalt 258, welcher sich längs der Längsrichtung 134 erstreckt und in vertikaler Richtung eine Ausdehnung im Bereich von beispielsweise ungefähr 15 cm bis ungefähr 50 cm aufweist, in einen oberen Abschnitt 260 der Strömungskammer 128 mündet, welcher nach oben durch den Applikationsbereich 108 und nach unten durch die Deckenwände 164 der Filtermodule 132 begrenzt ist.

Der Spalt 258 jeder Zuluftkammer ist knapp oberhalb der Deckenwände 164 der Filtermodule 132 angeordnet, so dass durch das Einströmen der Zuluft aus den Zuluftkammern in im Wesentlichen horizontaler Richtung längs der Oberseiten der Deckenwände 164 der Filtermodule 132 in die Strömungskammer 128 an der Oberseite der Filtermodule 132 jeweils ein Luftschleier gebildet wird, welcher von der jeweils zugeordneten Luftschleiererzeugungsvorrichtung 254 ausgehend zu einer Engstelle 262 zwischen den oberen Rändern der einander gegenüberstehenden Modulreihen 136 gerichtet ist und dadurch verhindert, dass der mit dem Nasslack-Overspray beladene Rohgasstrom 120 aus dem Applikationsbereich 108 zu der Oberseite der Filtermodule 132 gelangt und der Nasslack-Overspray aus dem Rohgasstrom 120 sich an der Oberseite der Filtermodule 132 absetzt.

An der Engstelle 262 der Strömungskammer 128 nimmt der vom Rohgasstrom durchströmbare horizontale Querschnitt der Strömungskammer 128 sprunghaft ab, so dass die Strömungsgeschwindigkeit des Rohgasstroms in dem unterhalb der Engstelle 262 befindlichen unteren Abschnitt 263 der Strömungskammer 128 deutlich höher ist als in dem oberhalb der Engstelle 262 befindlichen oberen Abschnitt 260 der Strömungskammer 128.

Die mittlere Strömungsrichtung der Luft in den von der Luftschleiererzeugungsvorrichtungen 254 erzeugten Querluftschleiern an der Oberseite der Filtermodule 132 ist in Fig. 3 durch die Pfeile 264 veranschaulicht.

Der Großteil der durch den Applikationsbereich 108 hindurchgeführten Luft wird somit in einem Umluftkreislauf geführt, welcher den Applikationsbereich 108, die Strömungskammer 128, die Filtermodule 132, die Abluftrohre 248, den Abluftkanal 250, das Abluftgebläse 252 sowie die Zuführleitung und die Luftkammer über dem Applikationsbereich 108 umfasst, wobei eine ständige Aufheizung der im Umluftkreislauf geführten Luft durch die Frischluftzufuhr über die Luftschleiererzeugungsvorrichtungen 254 vermieden wird.

Da die Abtrennung des Nasslack-Oversprays aus dem Rohgasstrom 120 mittels der Filterelemente 172 trocken, d.h. ohne Auswaschung mit einer Reinigungsflüssigkeit, erfolgt, wird die im Umluftkreislauf geführte Luft beim Abtrennen des Nasslack-Oversprays nicht befeuchtet, so dass auch keinerlei Vorrichtungen zur Entfeuchtung der im Umluftkreislauf geführten Luft erforderlich sind.

Ferner sind auch keine Vorrichtungen zur Abtrennung von Nasslack-Overspray aus einer Auswasch-Reinigungsflüssigkeit erforderlich.

Dadurch, dass der von dem Rohgasstrom durchströmbare horizontale Querschnitt der Strömungskammer 128 durch das Vorhandensein der Filtermodule 132 im unterhalb der Engstelle 262 liegenden unteren Abschnitt 263 der Strömungskammer 128 deutlich geringer ist als im oberen Abschnitt 260 der Strömungskammer 128 (beispielsweise im unteren Abschnitt 263 nur ungefähr 35 % bis ungefähr 50 % der horizontalen Querschnittsfläche der Strömungskammer 128 im oberen Abschnitt 260 derselben beträgt), wird die Strömungsgeschwindigkeit des Rohgasstroms auf dessen Weg vom Applikationsbereich 108 durch die Strömungskammer 128 bis zu den Einlassöffnungen 212 der Filtermodule 132 kontinuierlich erhöht, so dass sich ein ansteigendes Geschwindigkeitsprofil in dem Rohgasstrom ergibt.

Dieses ansteigende Geschwindigkeitsprofil hat zur Folge, dass aus den Filtermodulen 132 austretende Partikel nicht in den Applikationsbereich 108 gelangen können.

Dabei beträgt die Geschwindigkeit der Rohgasströmung im Applikationsbereich 108 und im oberen Abschnitt 260 der Strömungskammer 128 beispielsweise bis zu ungefähr 0,6 m/s, während sie im unteren Abschnitt 263 der Strömungskammer beispielsweise im Bereich von ungefähr 0,6 m/s bis ungefähr 3 m/s liegt und in den Einlassöffnungen 212 der Filtermodule 132 bis auf einen Maximalwert im Bereich von ungefähr 3 m/s bis ungefähr 5 m/s ansteigt.

Dadurch, dass die Filterelemente 172 in den Filtermodulen 132 komplett eingehaust sind, ist eine Aktivierung der Filterelemente 172 durch Aufbringen von Hilfsmaterial und eine Abreinigung der Filterelemente 172 jederzeit während des laufenden Lackierprozesses im Applikationsbereich 108 möglich.

Wird die Breite der Lackierkabine 110, d.h. deren Ausdehnung in der Querrichtung 112, verändert, so werden dennoch gleich große Filtermodule 132 verwendet; die Anpassung der Vorrichtung 126 zum Abtrennen von Nasslack-Overspray erfolgt in diesem Falle lediglich durch eine Erhöhung des Abstands der beiden Modulreihen 136 voneinander und durch eine Verbreiterung des begehbaren Steges 146.

Das Geschwindigkeitsprofil der Rohgasströmung ändert sich bei einer solchen Verbreiterung der Lackierkabine 110 somit nur in dem Bereich bis zu dem begehbaren Steg 146; ab hier, also insbesondere beim Passieren der Einlassöffnungen 212 der Filtermodule 132, ist das Geschwindigkeitsprofil der Rohgasströmung nur noch von der pro Zeiteinheit durchströmenden Rohgasmenge abhängig, nicht aber von der Geometrie der Strömungskammer 128.

Der Abstand der (begehbaren) Deckenwände 164 der Filtermodule 132 von der Unterkante der durch die Lackierkabine 110 hindurch geförderten Fahrzeugkarosserien 102 beträgt aus Wartungsgründen mindestens ungefähr 1,5 m.

Die Filterelemente 172 werden in bestimmten Zeitintervallen, wenn ihre Beladung mit Nasslack-Overspray und Hilfsmaterial ein vorgegebenes Maß erreicht hat, durch Druckluftimpulse abgereinigt.

Diese Abreinigung kann (in Abhängigkeit vom Druckverlustanstieg an den Filterelementen 172) beispielsweise einmal bis sechsmal pro 8-Stunden-Arbeitsschicht, d.h. ungefähr alle 1 bis 8 Stunden, erfolgen.

Die erforderlichen Druckluftimpulse werden mittels einer Abpulseinheit 266, welche an dem Grundkörper 174 der Filterelemente 172 jedes Filtermoduls 132 angeordnet ist, erzeugt, wobei die Abpulseinheit 266 dazu in der Lage ist, Druckluftimpulse an Druckluftrohre abzugeben, welche innerhalb des jeweiligen Grundkörpers 174 verlaufen und von der Abpulseinheit 266 in die Innenräume der Filterelemente 172 führen (Fig. 19).

Von den Innenräumen der Filterelemente 172 gelangen die Druckluftimpulse durch die porösen Filteroberflächen in den Filterelementaufnahmeraum 170, wobei die an den Filteroberflächen gebildete Sperrschicht aus Hilfsmaterial und dem daran abgeschiedenen Nasslack-Overspray von den Filteroberflächen abgelöst wird, so dass die Filteroberflächen in ihren abgereinigten Ursprungszustand zurückversetzt werden.

Der Abpulseinheit 266 umfasst ein Abpulsventil 268, über welches der Abpulseinheit 266 Druckluft aus einer Druckluftzuführleitung 270 zuführbar ist, die von einem Kompressor 272 gespeist wird (siehe Fig. 19).

An diese Druckluftzuführleitung 270 ist über ein Druckluftventil 274 auch die Druckluftrohrleitung 196 angeschlossen, welche zu den Austrittsdüsen 200 der Aufwirbelungseinrichtung 198 führt.

Ferner ist an die Druckluftzuführleitung 270 auch der Fluidboden 184 jedes Hilfsmaterialaufnahmebehälters 176 über eine mit einem Druckluftventil 276 versehene Druckluftleitung 278 angeschlossen.

Durch das Öffnen des Abpulsventils 268, des Druckluftventils 274 bzw. des Druckluftventils 276 kann somit, abwechselnd oder gleichzeitig, eine Abreinigung der Filterelemente 172, eine Aufwirbelung des Hilfsmaterials im Hilfsmaterialaufnahmebehälter 176 bzw. eine Fluidisierung des Hilfsmaterials im Hilfsmaterialaufnahmebehälter 176 mittels des Fluidbodens 184 ausgelöst werden.

Zwischen den genannten Druckluftventilen und dem Kompressor 272 ist in der Druckluftzuführleitung 270 ein Sperrventil 280 angeordnet, welches durch die Steuervorrichtung 210 im örtlichen Leitstand ansteuerbar ist.

Die Steuervorrichtung 210 sperrt durch Schließen des Sperrventils 280 die Druckluftzufuhr vom Kompressor 272 zu den genannten Druckluftverbrauchern eines Filtermoduls 132 oder aller Filtermodule 132, wenn sie feststellt, dass keine ausreichende Rohgasströmung durch die Filterelemente 172 vorhanden ist.

Um zu ermitteln, ob eine ausreichende Rohgasströmung durch die Filterelemente 172 vorhanden ist, kann beispielsweise vorgesehen sein, dass die Steuervorrichtung 210 den Betriebszustand des Abluftgebläses 252 überwacht. Diese Überwachung des Betriebszustands des Abluftgebläses 252 kann beispielsweise mittels eines Differenzdruckmessers (PDIA) 282 erfolgen, welcher den Druckabfall zwischen der Druckseite und der Saugseite des Abluftgebläses 252 misst.

Alternativ oder ergänzend hierzu kann der Betriebszustand des Abluftgebläses 252 von der Steuervorrichtung 210 auch mittels eines Stromüberwachungsgerätes (ESA) 284 und/oder mittels eines Frequenzumrichters (SC) 286 überwacht werden.

Ferner kann vorgesehen sein, dass das Fehlen einer ausreichenden Rohgasströmung durch die Filterelemente 172 mittels eines Durchflussmessgeräts (FIA) 288 ermittelt wird, welches den Gasfluss durch den Abluftkanal 250 oder durch eines oder mehrere der Abluftrohre 248 misst.

Ferner besteht die Möglichkeit, das Fehlen einer ausreichenden Rohgasströmung durch die Filterelemente 172 durch Messung des Druckabfalls an den Filterelementen 172 eines Filtermoduls 132 oder aller Filtermodule 132 zu ermitteln.

Wenn die Steuervorrichtung 210 aufgrund der ihr übermittelten Signale des Differenzdruckmessers 282, des Stromüberwachungsgeräts 284, des Frequenzumrichters 286 und/oder des Durchflussmessgeräts 288 feststellt, dass die Rohgasströmung durch die Filterelemente 172 unterhalb eines vorgegebenen Schwellenwerts liegt, wird die Druckluftzufuhr zu mindestens einem der Filtermodule 132 durch Schließen des Sperrventils 280 gesperrt.

Auf diese Weise wird verhindert, dass Hilfsmaterial durch Aufwirbeln mittels der Aufwirbelungseinheit 198, durch Abreinigen der Filterelemente 172 oder durch Fluidisieren des Hilfsmaterialvorrats im Hilfsmaterialaufnahmebehälter 176 in den Strömungsweg des Rohgases und insbesondere durch die Einlassöffnung 212 eines Filtermoduls 132 in die Strömungskammer 128 und von dort in den Applikationsbereich 108 gelangt.

Diese Sperrung der Druckluftzufuhr kann für alle Filtermodule 132 gemeinsam oder für die einzelnen Filtermodule 132 getrennt voneinander erfolgen. Im letzteren Falle erfolgt die Ermittlung des Fehlens einer ausreichenden Rohgasströmung durch die Filterelemente 172 für jedes der Filtermodule 132 getrennt, und es ist entweder für jedes Filtermodul 132 ein eigener Kompressor 272 vorgesehen oder die Druckluftzuführleitungen 270 zu den einzelnen Filtermodulen 132 sind über separat voneinander schaltbare Sperrventile 280 einzeln sperrbar oder freigebbar.

Das Hilfsmaterial wird bei der vorstehend beschriebenen Vorrichtung 126 zum Abtrennen von Nasslack-Overspray ausschließlich innerhalb der Filtermodule 132 durch Aufwirbeln des Hilfsmaterials in dem jeweiligen Hilfsmaterialaufnahmebehälter 176 dem Rohgasstrom zugegeben.

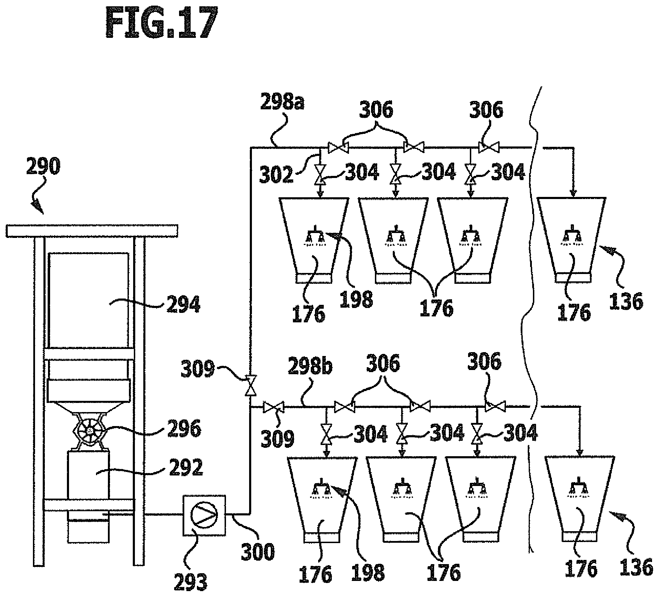

Um frisches Hilfsmaterial den in ihrer Arbeitsposition innerhalb der Filtermodule 132 fest montierten Hilfsmaterialaufnahmebehältern 176 zuführen zu können, umfasst die Vorrichtung 126 zum Abtrennen von Nasslack-Overspray eine in Fig. 17 schematisch dargestellte Hilfsmaterial-Zuführvorrichtung 290, welche einen Vorlagebehälter 292 umfasst, der als Blowpot oder als einfacher Fluidisierungsbehälter ausgebildet sein kann.

Blowpots sind an sich beispielsweise aus der JP 02123025 A oder der JP 06278868 A bekannt und wurden in Beschichtungsanlagen bisher dazu verwendet, Pulverlack zu den in der Nähe der Zerstäuber befindlichen Applikationsbehältern zu fördern. Es handelt sich um relativ kleine verschließbare Behälter mit einem luftdurchlässigen Boden, durch den Luft zum Fluidisieren des Pulvers und zu dessen Förderung in den Behälter geleitet wird.

Während ein Blowpot durch den Druck der Fluidisierungsluft entleert werden kann, wird andernfalls dem Fluidisierungsbehälter zur Materialförderung eine Pulverdosierpumpe 293 nachgeschaltet (siehe Fig. 1), wie beispielsweise die in der WO 03/024612 A1 beschriebene sogenannte DDF-Pumpe oder eine andere nach dem Dichtstromprinzip mit Saug-/Druckwechsel fördernde Dosierpumpe, wie sie beispielsweise aus der EP 1 427 536 B1, der WO 2004/087331 A1 oder aus Fig. 3 der DE 101 30 173 A1 bekannt sind.

Zum Befüllen des Vorlagebehälters 292 ist oberhalb desselben ein größerer Vorratsbehälter (Gebinde oder "Big Bag") 294 für das frische Hilfsmaterial angeordnet, aus dem im einfachsten Fall das Material durch eine mit einer Klappe verschließbare Öffnung in den Vorlagebehälter (Silo) 292 rieseln kann. Um den Vorlagebehälter 292 auch während der Materialförderung kontinuierlich nachfüllen zu können und Zeitverluste im Betrieb zu vermeiden, ist aber vorzugsweise zwischen dem Vorratsbehälter 294 und dem Vorlagebehälter 292 eine mechanische Fördereinrichtung 296, beispielsweise eine Zellenradschleuse oder eine Förderschnecke, angeordnet. Bei Einsatz einer solchen Fördereinrichtung lässt sich vorteilhafterweise auch eine gewünschte Füllmenge einstellen, im Fall einer Zellenradschleuse über die vorab bestimmte Füllmenge pro Zelle.

Der Vorlagebehälter 292 ist über eine in zwei Zweige 298a, 298b verzweigende Hauptleitung 300, von der Stichleitungen 302 zu jeweils einem der Hilfsmaterialaufnahmebehälter 176 führen, mit jedem der Hilfsmaterialaufnahmebehälter 176 verbunden. Dabei führt jeder der Zweige 298a, 298b der Hauptleitung 300 jeweils zu den Hilfsmaterialaufnahmebehältern 176 einer Modulreihe 136.

Die Hauptleitung 300 besteht vorzugsweise aus flexiblen Schläuchen.

Hierfür können Schläuche mit einem Innendurchmesser bis etwa 14 mm, insbesondere von ungefähr 6 mm bis ungefähr 12 mm, verwendet werden.

Die Stichleitungen 302 können rohrförmig sein und sind mit jeweils einem mechanischen Quetschventil 304 versehen, wobei in der Strömungsrichtung des Hilfsmaterials hinter der Abzweigung der jeweiligen Stichleitung 302 jeweils ein zweites Quetschventil 306 angeordnet ist.

Weitere Quetschventile 309 sind an der Verzweigung der beiden Zweige 298a, 298b der Hauptleitung 300 angeordnet, um diese beiden Zweige 298a, 298b nach Bedarf öffnen oder schließen zu können.

Im Betrieb der Hilfsmaterial-Zuführvorrichtung 290 sind die Hauptleitung 300 und alle Stichleitungen 302 zunächst leer. Wenn ein bestimmter Hilfsmaterialaufnahmebehälter 176 mit frischem Hilfsmaterial beschickt werden soll, wird die Hauptleitung hinter der Abzweigstelle der zugehörigen Stichleitung 302 durch Schließen des jeweils zugeordneten Quetschventils 306 gesperrt, die betreffende Stichleitung 302 durch Öffnen des zugeordneten Quetschventils 304 geöffnet und anschließend das Hilfsmaterial von dem Vorlagebehälter 292 in den betreffenden Hilfsmaterialaufnahmebehälter 176 gefördert.

Anschließend wird der vorstehend beschriebene Leitungsweg in den betreffenden Hilfsmaterialaufnahmebehälter 176 entleert und gespült. Dies bietet den Vorteil, dass die Beschickungsmenge immer genau bestimmt und dosierbar ist und dass der Leitungsweg nicht blockiert werden kann, da stets eine Spülung in den beschickten Hilfsmaterialaufnahmebehälter 176 erfolgt.

Jede der Stichleitungen 302 mündet in eine der Seitenwände 178 des jeweils zugeordneten Hilfsmaterialaufnahmebehälters 176, vorzugsweise in einem Bereich nahe des oberen Randes des Hilfsmaterialaufnahmebehälters 176, damit eine möglichst große Hilfsmaterialmenge durch die Stichleitung 302 zugeführt werden kann.

Die Stichleitung 302, welche zu dem jeweils letzten Hilfsmaterialaufnahmebehälter 176 einer Modulreihe 136 führt, bedarf keiner Quetschventilanordnung, da zur Beschickung dieses letzten Hilfsmaterialaufnahmebehälters 176 lediglich alle in der Hauptleitung 300 stromaufwärts von diesem Hilfsmaterialaufnahmebehälter 176 angeordneten Quetschventile 306 und 309 geöffnet sein müssen.

Statt der vorstehend beschriebenen Quetschventilanordnungen können an den Verzweigungen des Hilfsmaterial-Leitungssystems auch aus dem Stand der Technik an sich bekannte mechanische Quetschweichen oder andere Formen von Pulverweichen vorgesehen sein.

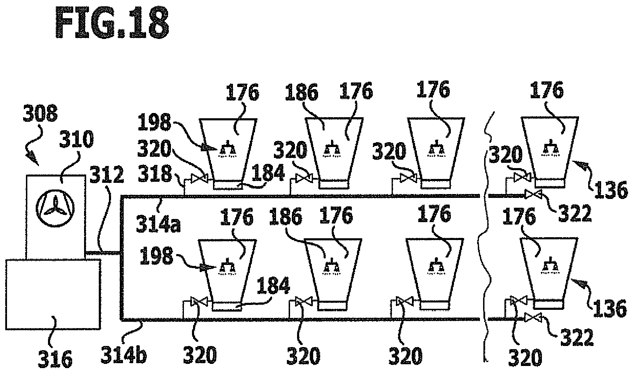

Um vor der Zufuhr von frischem Hilfsmaterial zu einem Hilfsmaterialaufnahmebehälter 176 das darin angesammelte, mit Overspray vermischte Hilfsmaterial entnehmen und einer Entsorgung oder Weiterverwertung zuführen zu können, umfasst die Vorrichtung 126 zum Abtrennen von Nasslack-Overspray ferner eine in Fig. 18 schematisch dargestellte Hilfsmaterial-Abführvorrichtung 308.

Die Hilfsmaterial-Abführvorrichtung 308 umfasst ihrerseits ein Sauggebläse 310, beispielsweise ein Staubsaugergebläse, welches gebrauchtes Hilfsmaterial aus einer Hauptleitung 312, die sich in zwei Zweige 314a, 314b verzweigt, in einen unter dem Sauggebläse 310 angeordneten Sammelbehälter 316 fördert.

Jeweils einer der Zweige 314a, 314b der Hauptleitung 312 führt zu den Hilfsmaterialaufnahmebehältern 176 einer Modulreihe 136 und ist über jeweils eine Stichleitung 318, welche mittels eines Quetschventils 320 verschließbar ist, an jeden der Hilfsmaterialaufnahmebehälter 176 der betreffenden Modulreihe 136 angeschlossen.

Am Ende jedes Zweiges 314a, 314b der Hauptleitung 312 ist jeweils ein Kugelhahn 322 angeordnet, durch welchen bei Bedarf Förderluft in die Hauptleitung 312 zuführbar ist, um das Absaugen des Hilfsmaterials aus der Hauptleitung 312 zum Sauggebläse 310 zu erleichtern.

Die Stichleitungen 318 münden jeweils knapp über dem Fluidboden 184 in den Innenraum 186 des jeweiligen Hilfsmaterialaufnahmebehälters 176, vorzugsweise in einem Eckbereich des Hilfsmaterialaufnahmebehälters 176, in welchem zwei Seitenwände 178 aneinandergrenzen.

Besonders günstig für eine effiziente und möglichst vollständige Absaugung des gebrauchten Hilfsmaterials aus einem Hilfsmaterialaufnahmebehälter 176 ist es, wenn sich die Stichleitung 318 in zwei Absaugleitungen verzweigt, von denen jede an einem anderen Eckbereich in den Innenraum 186 des Hilfsmaterialaufnahmebehälters 176 mündet.

Wenn ein bestimmter Hilfsmaterialaufnahmebehälter 176 von gebrauchtem, mit Overspray vermischtem Hilfsmaterial entleert werden soll, so wird hierfür das Quetschventil 320 der jeweils zugeordneten Stichleitung 318 geöffnet und mittels des Sauggebläses 310 das im Hilfsmaterialaufnahmebehälter 176 vorhandene Material durch die Stichleitung 318 und die Hauptleitung 312 angesaugt und in den Sammelbehälter 316 gefördert.

Der Absaugvorgang wird durch Schließen des jeweils zugeordneten Quetschventils 320 beendet.

Während des Absaugvorgangs wird der Fluidboden 184 des betreffenden Hilfsmaterialaufnahmebehälters 176 dauerhaft in Betrieb genommen, d.h. während des ganzen Absaugvorgangs mit Druckluft durchströmt, um das abzusaugende Material zu fluidisieren und gut fließfähig zu machen.

Ferner kann das Absaugen des gebrauchten Materials aus dem Hilfsmaterialaufnahmebehälter 176 dadurch unterstützt werden, dass während des Absaugvorgangs die Aufwirbelungseinrichtung 198 des betreffenden Hilfsmaterialaufnahmebehälters 176 kontinuierlich oder intervallweise (für beispielsweise 6 x 5 Sekunden pro Minute) in Betrieb genommen wird, weil durch die Beaufschlagung des abzusaugenden Materials mit Druckluft von oben durch die Austrittsdüsen 200 der Aufwirbelungseinrichtung 198 das Material aufgelockert und zu den Mündungsöffnungen der Stichleitung 318 hin bewegt wird.

Falls die Absaugung des gebrauchten Hilfsmaterials aus einem der Hilfsmaterialaufnahmebehälter 176 nicht einwandfrei funktioniert, was daran zu erkennen ist, dass der zugeordnete Füllstandssensor 204 einen nicht mehr absinkenden Füllstand meldet, muss der Betrieb der Vorrichtung 126 zum Abtrennen von Nasslack-Overspray nicht unterbrochen werden. Vielmehr kann stattdessen Hilfsmaterial aus einem anderen Hilfsmaterialaufnahmebehälter 176 abgesaugt werden, welcher an demselben Zweig 314a oder 314b der Hauptleitung 312 angeschlossen ist. Hierdurch kann in vielen Fällen die Blockade des Materialtransports aus dem blockierten Hilfsmaterialaufnahmebehälter 176 behoben werden, so dass anschließend das Material aus dem zuvor blockierten Hilfsmaterialaufnahmebehälter 176 abgesaugt werden kann.

Das aus den Hilfsmaterialaufnahmebehälter 176 abgesaugte Material, welches Hilfsmaterial zusammen mit Overspray-Partikeln enthält, kann entweder entsorgt oder - gegebenenfalls nach einer Aufbereitung - zumindest teilweise in der Beschichtungsanlage wiederverwendet werden.

Ferner kann vorgesehen sein, die Stoffe des Hilfsmaterials so zu wählen, dass sie nach Gebrauch in der Beschichtungsanlage für andere Zwecke als für die Beschichtung von Werkstücken verwertet werden können. Beispielsweise kann das gebrauchte Hilfsmaterial als Dämmmaterial verwendet oder, beispielsweise in der Ziegel- oder Zementindustrie oder dergleichen, thermisch verwertet werden, wobei der an das Hilfsmaterial gebundene Nasslack-Overspray ebenfalls als Energieträger bei einem für die Produktion erforderlichen Verbrennungsvorgang genutzt werden kann.

Nach dem Absaugen des gebrauchten Hilfsmaterials aus einem Hilfsmaterialaufnahmebehälter 176 wird derselbe mittels der vorstehend bereits beschriebenen Hilfsmaterial-Zuführvorrichtung 290 mit frischem Hilfsmaterial befüllt, und zwar beispielsweise bis zu einem Erstbefüllungsfüllstand von ungefähr 50 % des gesamten Fassungsvermögens des Hilfsmaterialaufnahmebehälters 176.

Durch die Anreicherung von Nasslack-Overspray, welcher eine geringere Dichte aufweist als das Hilfsmaterial, in dem Gemisch aus Hilfsmaterial und Overspray, welches in dem Hilfsmaterialaufnahmebehälter 176 vorhanden ist, nimmt die Dichte dieses Gemisches während des Betriebs eines Filtermoduls 132 immer weiter ab, so dass die Sperrschicht, welche sich auf den Filterelementen 172 des Filtermoduls 132 aufbaut, ein immer größeres Volumen aufweist.

Der Füllstand des Materials im Hilfsmaterialaufnahmebehälter 176 unmittelbar vor einem Abreinigungsvorgang der Filterelemente 172 nimmt daher immer weiter ab.

Bei einem vorgegebenen Restfüllstand, welcher beispielsweise ungefähr 10 % des Fassungsvermögens des Hilfsmaterialaufnahmebehälters 176 entspricht, wird das mit Overspray vermischte Hilfsmaterial aus dem Hilfsmaterialaufnahmebehälter 176 abgesaugt, wie vorstehend beschrieben. Durch das Absaugen vor einem Abreinigungsvorgang der Filterelemente 172 wird erreicht, dass hauptsächlich das unbrauchbar gewordene Material, das sich im Hilfsmaterialaufnahmebehälter 176 angesammelt hat und nicht die Sperrschicht auf den Filterelementen 172 bildet, aus dem Hilfsmaterialaufnahmebehälter 176 entnommen wird.

Alternativ zu dieser Vorgehensweise kann auch vorgesehen sein, dass der Füllstand des Materials im Hilfsmaterialaufnahmebehälter 176 jeweils nach einem Abreinigungsvorgang der Filterelemente 172 des Filtermoduls 132 gemessen wird und ein Absaugvorgang eingeleitet wird, wenn ein vorgegebener Höchstfüllstand, beispielsweise 90 % des maximalen Fassungsvermögens des Hilfsmaterialaufnahmebehälters 176, erreicht ist.

In jedem Fall wird der Füllstand des Materials im Hilfsmaterialaufnahmebehälter 176, welcher einen Absaugvorgang loslöst, mittels des Füllstandssensors 204, der im jeweiligen Hilfsmaterialaufnahmebehälter 176 angeordnet ist, bestimmt.

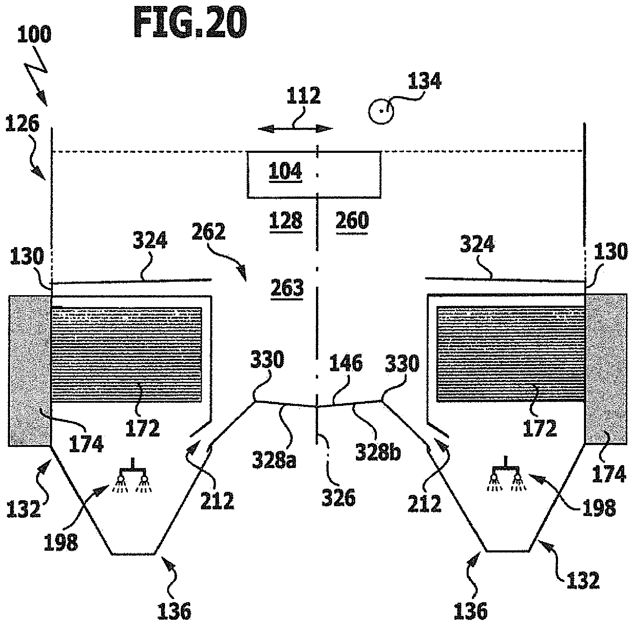

Eine in Fig. 20 in einem schematischen Querschnitt dargestellte zweite Ausführungsform einer Anlage 100 zum Lackieren von Fahrzeugkarosserien 102 unterscheidet sich von der vorstehend beschriebenen ersten Ausführungsform dadurch, dass oberhalb der Filtermodule 132 separate Querluftschleierleitbleche 324 angeordnet sind, welche dazu dienen, die von den Luftschleiererzeugungsvorrichtungen 254 zugeführte Zuluft zu der Engstelle 262 zwischen dem oberen Abschnitt 260 und dem unteren Abschnitt 263 der Strömungskammer 128 hin zu leiten.

Diese Querluftschleierleitbleche 324 sind unter einem Winkel von beispielsweise ungefähr 1° bis ungefähr 3° gegen die Horizontale zu der jeweils benachbarten Seitenwand 130 der Strömungskammer 128 hin geneigt, so dass von oben auf die Querluftschleierleitbleche 324 gelangende Flüssigkeiten nicht zu der Engstelle 262, sondern zu den Seitenwänden 130 hin abfließen.

Auf diese Weise wird gewährleistet, dass beispielsweise aufgrund eines Schlauchplatzers ausströmender Lack aus dem Applikationsbereich 108 oder Löschwasser nicht in den unteren Abschnitt 263 der Strömungskammer 128 und von dort in die Filtermodule 132 gelangen, sondern vielmehr an den Seiten der Strömungskammer 128 abfließen können.

Ferner ist bei dieser Ausführungsform der begehbare Steg 146 zwischen den Modulreihen 136 in zwei im Wesentlichen spiegelsymmetrisch zu einer vertikalen Längsmittelebene 326 der Strömungskammer 128 ausgebildete Hälften 328a, 328b unterteilt, welche jeweils unter einem Winkel von beispielsweise ungefähr 1° bis beispielsweise ungefähr 3° gegenüber der Horizontalen zu der Längsmittelebene 326 hin geneigt sind, so dass von oben auf den begehbaren Steg 146 gelangende Flüssigkeiten, wie beispielsweise Lack oder Löschwasser, nicht über die seitlichen Ränder 330 des begehbaren Stegs 146 hinweg zu den Einlassöffnungen 212 der Filtermodule 132 gelangen, sondern in der Mitte des begehbaren Stegs 146 zurückgehalten werden.

Sowohl der begehbare Steg 146 als auch die Querluftschleierleitbleche 324 können zusätzlich in der Längsrichtung 134 der Strömungskammer 128 gegen die Horizontale geneigt sein, so dass die auf diesen Elementen befindlichen Flüssigkeiten aufgrund der Schwerkraftwirkung zu einer Abflussöffnung abfließen können.

Im Übrigen stimmt die in Fig. 20 dargestellte zweite Ausführungsform einer Anlage 100 zum Lackieren von Fahrzeugkarosserien 102 hinsichtlich Aufbau und Funktion mit der in den Fig. 1 bis 19 dargestellten ersten Ausführungsform überein, auf deren vorstehende Beschreibung insoweit Bezug genommen wird.

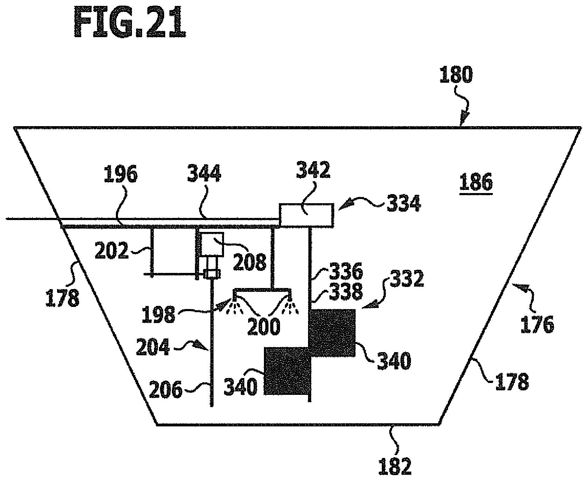

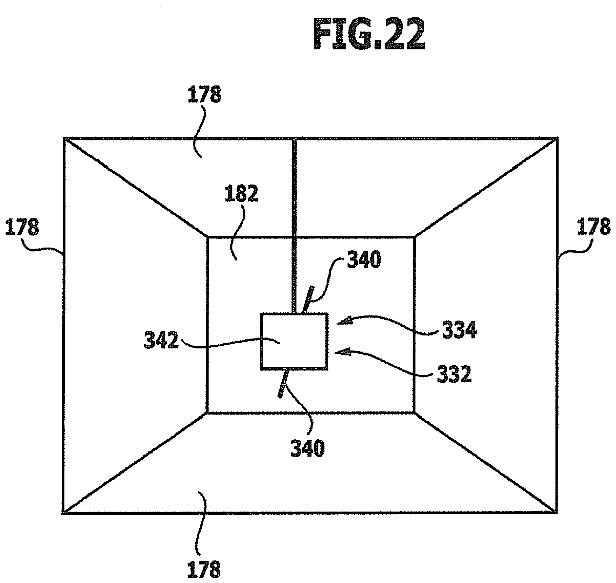

Die Hilfsmaterialaufnahmebehälter 176 der Filtermodule 132 der vorstehend beschriebenen Anlagen 100 zum Lackieren von Fahrzeugkarosserien 102 können alternativ oder ergänzend zu dem in Fig. 13 dargestellten Fluidboden 184 auch andere Einrichtungen 332 zum Durchmischen des im Hilfsmaterialaufnahmebehälter 176 befindlichen Materials aufweisen, beispielsweise ein in den Fig. 21 und 22 schematisch dargestelltes pneumatisch betriebenes Rührwerk 334.

Das pneumatisch betriebene Rührwerk 334 umfasst einen Rührer 336 mit mindestens zwei drehfest an einer im Wesentlichen vertikal ausgerichteten Rührwelle 338 angeordneten Rührwerkpaddeln 340 und eine in den Fig. 21 und 22 rein schematisch dargestellte Rührwerkturbine 342, mittels welcher die Rührwelle 338 zu einer Drehbewegung um ihre vertikale Achse antreibbar ist.

Die Rührwerkpaddel 340 sind in einem Winkelabstand von beispielsweise ungefähr 180° und in der Axialrichtung der Rührwelle 338 gegeneinander versetzt an der Rührwelle 338 angeordnet.

Der Rührwerkturbine 342 ist Druckluft über eine Druckluftzuführleitung 344 zuführbar.

Wird der Rührwerkturbine 342 über die Druckluftzuführleitung 344 Druckluft zugeführt, so versetzt die zugeführte Druckluft die Rührwerkturbine 342 in eine Drehbewegung um deren vertikale Achse, worauf sich die drehfest mit der Rührwerkturbine 342 verbundene Rührwelle 338 ebenfalls in Bewegung setzt.

Dabei wird das im Hilfsmaterialaufnahmebehälter 176 befindliche Material durch die sich drehenden Rührwerkpaddel 340 durchmischt, und die Oberfläche des im Hilfsmaterialaufnahmebehälter 176 befindlichen Materials wird geglättet. Im Hilfsmaterialaufnahmebehälter 176 durch Unterhöhlung gebildete Materialbrücken werden aufgebrochen.

Auf diese Weise wird eine gute Durchmischung des Materials im Hilfsmaterialaufnahmebehälter 176 und eine Vergleichmäßigung des Füllstands des Materials innerhalb des Hilfsmaterialaufnahmebehälters 176 erzielt.

Durch den pneumatischen Antrieb des Rührwerks 334 wird eine Funkenbildung innerhalb des Hilfsmaterialaufnahmebehälters 176 vermieden und ein ausreichender Explosionsschutz gewährleistet.

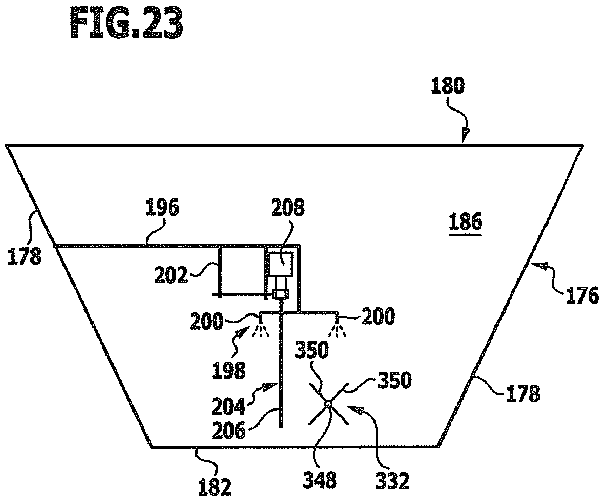

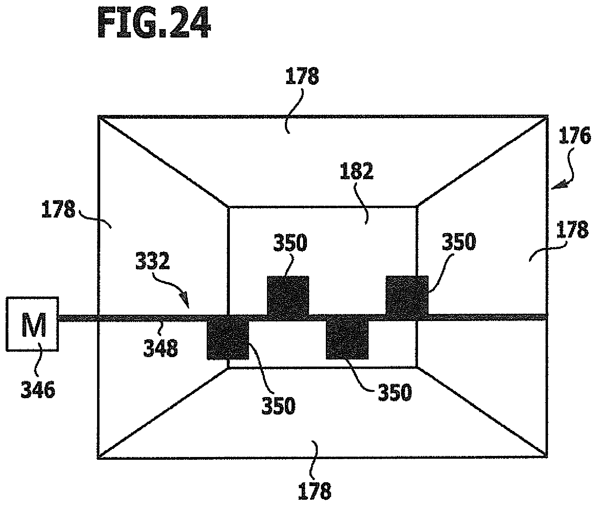

Eine in den Fig. 23 und 24 dargestellte alternative Ausführungsform einer Einrichtung 332 zum Durchmischen des im Hilfsmaterialaufnahmebehälter 176 befindlichen Materials umfasst einen Elektromotor 346, der seitlich neben dem Hilfsmaterialaufnahmebehälter 176 angeordnet ist und dessen Abtriebswelle 348 durch eine Seitenwand 178 des Hilfsmaterialaufnahmebehälters 176 hindurchgeführt und mit mehreren, beispielsweise vier, Paddeln 350 versehen ist, die drehfest und in einem Winkelabstand von beispielsweise jeweils ungefähr 90° sowie in der Axialrichtung der Abtriebswelle 348 gegeneinander versetzt an der Abtriebswelle 348 angeordnet sind.

Durch Drehen der Abtriebswelle 348 mittels des Elektromotors 346 um deren im Wesentlichen horizontal ausgerichtete Achse werden die Paddel 350 in Drehbewegung versetzt, wodurch die Paddel 350 das im Hilfsmaterialaufnahmebehälter 176 befindliche Material durchmischen und dessen Oberfläche glätten sowie im Hilfsmaterialaufnahmebehälter 176 entstandene Materialbrücken aufbrechen.

Der Umbau einer bereits bestehenden Vorrichtung 126 zum Abtrennen von Nasslack-Overspray aus einem Overspray-Partikel enthaltenden Rohgasstrom kann unter Verwendung der Filtermodule 132 der vorstehend beschriebenen Anlagen 100 in folgender Weise erfolgen:
Zunächst wird ein Teil der bestehenden Vorrichtung abgebaut, so dass der von einem Filtermodul 132 in seiner Arbeitsposition beanspruchte Raum freigegeben wird.

Anschließend wird ein Filtermodul 132 in der auf diese Weise freigegebenen Arbeitsposition angeordnet und mit der Tragekonstruktion für den Applikationsbereich 108, insbesondere mit den Kabinenwänden 114 der Lackierkabine 110, verbunden.

Anschließend werden diese Schritte wiederholt, bis alle Filtermodule 132 in ihrer Arbeitsposition angeordnet und mit der Tragekonstruktion für den Applikationsbereich 108 verbunden sind.

Auf diese Weise kann beispielsweise eine bestehende Vorrichtung zum nassen Abtrennen von Nasslack-Overspray durch die vorstehend beschriebene, modular aufgebaute Vorrichtung 126 zum trockenen Abtrennen von Nasslack-Overspray ersetzt werden, ohne dass es hierfür erforderlich ist, den Applikationsbereich 108 der Anlage 100 zum Lackieren von Fahrzeugkarosserien 102 zu demontieren.

Besondere Ausführungsformen der vorliegenden Erfindung sind die Folgenden:
1. Verfahren zum Zuführen von frischem Hilfsmaterial, das einem mit Nasslack-Overspray beladenen Rohgasstrom (120) zugegeben wird, bevor der Rohgasstrom (120) mindestens ein Filterelement (172) zum Abtrennen des Oversprays aus dem Rohgasstrom (120) passiert, in mindestens eine Filtervorrichtung (132), die mindestens einen Hilfsmaterialaufnahmebehälter (176) umfasst, der sich in einer Arbeitsposition befindet, während der Rohgasstrom (120) das Filterelement (172) passiert,
   dadurch gekennzeichnet,
   dass das Zuführen des frischen Hilfsmaterials direkt in den Hilfsmaterialaufnahmebehälter (176) erfolgt, während der Hilfsmaterialaufnahmebehälter (176) sich in der Arbeitsposition befindet.
2. Verfahren nach Ausführungsform 1, dadurch gekennzeichnet, dass der mindestens eine Hilfsmaterialaufnahmebehälter (176) unbeweglich in der Arbeitsposition montiert ist.
3. Verfahren nach einer der Ausführungsformen 1 oder 2, dadurch gekennzeichnet, dass das Hilfsmaterial durch eine an den Hilfsmaterialaufnahmebehälter (176) angeschlossene Hilfsmaterial-Zuführleitung (300, 302) in den Hilfsmaterialaufnahmebehälter (176) zugeführt wird.
4. Verfahren nach einer der Ausführungsformen 1 bis 3, dadurch gekennzeichnet, dass das frische Hilfsmaterial aus mindestens einem Vorlagebehälter (292) in den mindestens einen Hilfsmaterialaufnahmebehälter (176) gefördert wird.
5. Verfahren nach einer der Ausführungsformen 1 bis 4, dadurch gekennzeichnet, dass mit Overspray vermischtes Hilfsmaterial aus dem mindestens einen Hilfsmaterialaufnahmebehälter (176) durch eine an den Hilfsmaterialaufnahmebehälter (176) angeschlossene Hilfsmaterial-Abführleitung (312, 318) entnommen wird.
6. Verfahren nach Ausführungsform 5, dadurch gekennzeichnet, dass mindestens eine Hilfsmaterial-Abführleitung (318) in einem Eckbereich des Hilfsmaterialaufnahmebehälters (176) in einen Innenraum (186) des Hilfsmaterialaufnahmebehälters (176) mündet.
7. Verfahren nach einer der Ausführungsformen 5 oder 6, dadurch gekennzeichnet, dass mindestens zwei Hilfsmaterial-Abführleitungen (318) in einen Innenraum (186) des Hilfsmaterialaufnahmebehälters (176) münden.
8. Verfahren nach einer der Ausführungsformen 5 bis 7, dadurch gekennzeichnet, dass das mit Overspray vermischte Hilfsmaterial aus dem mindestens einen Hilfsmaterialaufnahmebehälter (176) in einen Sammelbehälter (316) gefördert wird.
9. Verfahren nach einer der Ausführungsformen 5 bis 8, dadurch gekennzeichnet, dass das mit Overspray vermischte Hilfsmaterial aus dem mindestens einen Hilfsmaterialaufnahmebehälter (176) abgesaugt wird.
10. Verfahren nach einer der Ausführungsformen 5 bis 9, dadurch gekennzeichnet, dass mit Overspray vermischtes Hilfsmaterial aus mindestens einem Hilfsmaterialaufnahmebehälter (176) entnommen wird, um den Hilfsmaterialaufnahmebehälter (176) zu entleeren, bevor frisches Hilfsmaterial in den Hilfsmaterialaufnahmebehälter (176) zugeführt wird.
11. Verfahren nach einer der Ausführungsformen 5 bis 10, dadurch gekennzeichnet, dass mit Overspray vermischtes Hilfsmaterial aus mindestens einem Hilfsmaterialaufnahmebehälter (176) entnommen wird, wenn das Hilfsmaterial in dem Hilfsmaterialaufnahmebehälter (176) einen vorgegebenen Füllstand erreicht.
12. Verfahren nach Ausführungsform 11, dadurch gekennzeichnet, dass der Füllstand des Hilfsmaterials mittels eines in dem Hilfsmaterialaufnahmebehälter (176) angeordneten Füllstandssensors (204) gemessen wird.
13. Verfahren nach einer der Ausführungsformen 11 oder 12, dadurch gekennzeichnet, dass mit Overspray vermischtes Hilfsmaterial aus mindestens einem Hilfsmaterialaufnahmebehälter (176) entnommen wird, wenn der Füllstand des Hilfsmaterials in dem Hilfsmaterialaufnahmebehälter (176) bis auf einen vorgegebenen Mindestfüllstand abgesunken ist.
14. Verfahren nach einer der Ausführungsformen 11 bis 13, dadurch gekennzeichnet, dass mit Overspray vermischtes Hilfsmaterial aus mindestens einem Hilfsmaterialaufnahmebehälter (176) entnommen wird, wenn der Füllstand des Hilfsmaterials in dem Hilfsmaterialaufnahmebehälter (176) bis auf einen vorgegebenen Maximalfüllstand angestiegen ist.
15. Verfahren nach Ausführungsform 14, dadurch gekennzeichnet, dass mindestens ein einem Hilfsmaterialaufnahmebehälter (176) zugeordnetes Filterelement (172) abgereinigt wird und mit Overspray vermischtes Hilfsmaterial aus dem Hilfsmaterialaufnahmebehälter (176) entnommen wird, wenn der durch die Abreinigung angestiegene Füllstand des Hilfsmaterials in dem Hilfsmaterialaufnahmebehälter (176) einen vorgegebenen Maximalfüllstand erreicht hat.
16. Verfahren nach einer der Ausführungsformen 5 bis 15, dadurch gekennzeichnet, dass das mit Overspray vermischte Hilfsmaterial in mindestens einem Hilfsmaterialaufnahmebehälter (176) fluidisiert wird, während mit Overspray vermischtes Hilfsmaterial aus dem Hilfsmaterialaufnahmebehälter (176) entnommen wird.
17. Verfahren nach einer der Ausführungsformen 5 bis 16, dadurch gekennzeichnet, dass das Hilfsmaterial in mindestens einem Hilfsmaterialaufnahmebehälter (176) mittels einer Aufwirbelungseinrichtung (198) zumindest zeitweise aufgewirbelt wird, während mit Overspray vermischtes Hilfsmaterial aus dem Hilfsmaterialaufnahmebehälter (176) entnommen wird.
18. Hilfsmaterialaufnahmebehälter zum Aufnehmen eines Hilfsmaterials, das einem mit Nasslack-Overspray beladenen Rohgasstrom (120) zugegeben wird, bevor der Rohgasstrom (120) mindestens ein Filterelement (172) zum Abtrennen des Oversprays aus dem Rohgasstrom (120) passiert, während der Hilfsmaterialaufnahmebehälter (176) sich in einer Arbeitsposition befindet, dadurch gekennzeichnet, dass der Hilfsmaterialaufnahmebehälter (176) an eine Hilfsmaterial-Zuführvorrichtung (290) zum Zuführen von frischem Hilfsmaterial direkt in den in Arbeitsposition befindlichen Hilfsmaterialaufnahmebehälter (176) angeschlossen ist.
19. Hilfsmaterialaufnahmebehälter nach Ausführungsform 18, dadurch gekennzeichnet, dass der Hilfsmaterialaufnahmebehälter (176) unbeweglich in seiner Arbeitsposition montiert ist.
20. Hilfsmaterialaufnahmebehälter nach einer der Ausführungsformen 18 oder 19, dadurch gekennzeichnet, dass der Hilfsmaterialaufnahmebehälter (176) einen Fluidboden (184) zum Fluidisieren des in dem Hilfsmaterialaufnahmebehälter (176) befindlichen Hilfsmaterials umfasst.
21. Hilfsmaterialaufnahmebehälter nach einer der Ausführungsformen 18 bis 20, dadurch gekennzeichnet, dass der Hilfsmaterialaufnahmebehälter (176) mit einer Aufwirbelungseinrichtung (198) zum Aufwirbeln von in dem Hilfsmaterialaufnahmebehälter (176) befindlichem Hilfsmaterial versehen ist.
22. Vorrichtung zum Abtrennen von Nasslack-Overspray aus einem Overspray-Partikel enthaltenden Rohgasstrom (120), umfassend mindestens ein Filterelement (172) zum Abtrennen des Oversprays aus dem Rohgasstrom (120) und mindestens einen Hilfsmaterialaufnahmebehälter (176) nach einer der Ausführungsformen 18 bis 21.
23. Vorrichtung nach Ausführungsform 22, dadurch gekennzeichnet, dass die Vorrichtung (126) eine Hilfsmaterial-Zuführvorrichtung (290) zum Zuführen von frischem Hilfsmaterial in mindestens einen sich in seiner Arbeitsposition befindlichen Hilfsmaterialaufnahmebehälter (176) umfasst.
24. Vorrichtung nach Ausführungsform 23, dadurch gekennzeichnet, dass die Hilfsmaterial-Zuführvorrichtung (290) eine an den mindestens einen Hilfsmaterialaufnahmebehälter (176) angeschlossene Hilfsmaterial-Zuführleitung (300, 302) umfasst.
25. Vorrichtung nach einer der Ausführungsformen 23 oder 24, dadurch gekennzeichnet, dass die Hilfsmaterial-Zuführvorrichtung (290) mindestens einen Vorlagebehälter (292) umfasst, aus welchem frisches Hilfsmaterial in den mindestens einen Hilfsmaterialaufnahmebehälter (176) förderbar ist.
26. Vorrichtung nach einer der Ausführungsformen 22 bis 25, dadurch gekennzeichnet, dass die Vorrichtung (126) eine Hilfsmaterial-Abführvorrichtung (308) zum Entnehmen von mit Overspray vermischtem Hilfsmaterial aus dem mindestens einen Hilfsmaterialaufnahmebehälter (176) umfasst.
27. Vorrichtung nach Ausführungsform 26, dadurch gekennzeichnet, dass die Hilfsmaterial-Abführvorrichtung (308) mindestens eine an mindestens einen Hilfsmaterialaufnahmebehälter (176) angeschlossene Hilfsmaterial-Abführleitung (312, 318) umfasst.
28. Vorrichtung nach Ausführungsform 27, dadurch gekennzeichnet, dass mindestens eine Hilfsmaterial-Abführleitung (318) in einem Eckbereich des Hilfsmaterialaufnahmebehälters (176) in einen Innenraum (186) des mindestens einen Hilfsmaterialaufnahmebehälters (176) mündet.
29. Vorrichtung nach einer der Ausführungsformen 27 oder 28, dadurch gekennzeichnet, dass mindestens zwei Hilfsmaterial-Abführleitungen (318) in einen Innenraum (186) des mindestens einen Hilfsmaterialaufnahmebehälters (176) münden.
30. Vorrichtung nach einer der Ausführungsformen 26 bis 29, dadurch gekennzeichnet, dass die Hilfsmaterial-Abführvorrichtung (308) mindestens einen Sammelbehälter (316) umfasst, in welchen mit Overspray vermischtes Hilfsmaterial aus mindestens einem Hilfsmaterialaufnahmebehälter (176) förderbar ist.
31. Vorrichtung nach einer der Ausführungsformen 26 bis 30, dadurch gekennzeichnet, dass die Hilfsmaterial-Abführvorrichtung (308) mindestens eine Absaugvorrichtung (310) zum Absaugen von mit Overspray vermischtem Hilfsmaterial aus mindestens einem Hilfsmaterialaufnahmebehälter (176) umfasst.
32. Vorrichtung nach einer der Ausführungsformen 22 bis 31, dadurch gekennzeichnet, dass mindestens ein Hilfsmaterialaufnahmebehälter (176) mit einem Füllstandssensor (204) zum Messen des Füllstands des Hilfsmaterials im dem Hilfsmaterialaufnahmebehälter (176) versehen ist.
33. Anlage zum Lackieren von Gegenständen, insbesondere von Fahrzeugkarosserien (102), umfassend mindestens einen Applikationsbereich (108) zum Applizieren von Nasslack auf die zu lackierenden Gegenstände und mindestens eine Vorrichtung (126) zum Abtrennen von Nasslack-Overspray nach einer der Ausführungsformen 22 bis 32.

## Patentansprüche

1. Verfahren zum Zuführen von frischem Hilfsmaterial, das einem mit Nasslack-Overspray beladenen Rohgasstrom (120) zugegeben wird, bevor der Rohgasstrom (120) mindestens ein Filterelement (172) zum Abtrennen des Oversprays aus dem Rohgasstrom (120) passiert, in mindestens eine Filtervorrichtung (132), die mindestens einen Hilfsmaterialaufnahmebehälter (176) umfasst, der sich in einer Arbeitsposition befindet, während der Rohgasstrom (120) das Filterelement (172) passiert,
wobei der Hilfsmaterialaufnahmebehälter (176) in der Arbeitsposition so unterhalb von mindestens einem Filterelement (172) angeordnet ist, dass ein von dem Filterelement (172) abgereinigtes Gemisch aus Hilfsmaterial und Nasslack-Overspray beim Abreinigen nach unten in den Hilfsmaterialaufnahmebehälter (176) gelangt,
**dadurch gekennzeichnet,**
**dass** das Zuführen des frischen Hilfsmaterials direkt in den Hilfsmaterialaufnahmebehälter (176) erfolgt, während der Hilfsmaterialaufnahmebehälter (176) sich in der Arbeitsposition befindet, und
**dass** das Hilfsmaterial durch eine an den Hilfsmaterialaufnahmebehälter (176) angeschlossene Hilfsmaterial-Zuführleitung (300, 302) in den Hilfsmaterialaufnahmebehälter (176) zugeführt wird.

2. Verfahren nach Anspruch 1, **dadurch gekennzeichnet, dass** das frische Hilfsmaterial aus mindestens einem Vorlagebehälter (292) in den mindestens einen Hilfsmaterialaufnahmebehälter (176) gefördert wird.

3. Verfahren nach einem der Ansprüche 1 oder 2, **dadurch gekennzeichnet, dass** mit Overspray vermischtes Hilfsmaterial aus dem mindestens einen Hilfsmaterialaufnahmebehälter (176) durch eine an den Hilfsmaterialaufnahmebehälter (176) angeschlossene Hilfsmaterial-Abführleitung (312, 318) entnommen wird.

4. Verfahren nach Anspruch 3, **dadurch gekennzeichnet, dass** mindestens eine Hilfsmaterial-Abführleitung (318) in einem Eckbereich des Hilfsmaterialaufnahmebehälters (176) in einen Innenraum (186) des Hilfsmaterialaufnahmebehälters (176) mündet und/oder
dass mindestens zwei Hilfsmaterial-Abführleitungen (318) in einen Innenraum (186) des Hilfsmaterialaufnahmebehälters (176) münden.

5. Verfahren nach einem der Ansprüche 3 oder 4, **dadurch gekennzeichnet, dass** das mit Overspray vermischte Hilfsmaterial aus dem mindestens einen Hilfsmaterialaufnahmebehälter (176) in einen Sammelbehälter (316) gefördert wird und/oder
dass das mit Overspray vermischte Hilfsmaterial aus dem mindestens einen Hilfsmaterialaufnahmebehälter (176) abgesaugt wird.

6. Verfahren nach einem der Ansprüche 3 bis 5, **dadurch gekennzeichnet, dass** mit Overspray vermischtes Hilfsmaterial aus mindestens einem Hilfsmaterialaufnahmebehälter (176) entnommen wird, um den Hilfsmaterialaufnahmebehälter (176) zu entleeren, bevor frisches Hilfsmaterial in den Hilfsmaterialaufnahmebehälter (176) zugeführt wird.

7. Verfahren nach einem der Ansprüche 3 bis 6, **dadurch gekennzeichnet, dass** mit Overspray vermischtes Hilfsmaterial aus mindestens einem Hilfsmaterialaufnahmebehälter (176) entnommen wird, wenn das Hilfsmaterial in dem Hilfsmaterialaufnahmebehälter (176) einen vorgegebenen Füllstand erreicht.

8. Verfahren nach Anspruch 7, **dadurch gekennzeichnet, dass** der Füllstand des Hilfsmaterials mittels eines in dem Hilfsmaterialaufnahmebehälter (176) angeordneten Füllstandssensors (204) gemessen wird.

9. Verfahren nach einem der Ansprüche 7 oder 8, **dadurch gekennzeichnet, dass** mit Overspray vermischtes Hilfsmaterial aus mindestens einem Hilfsmaterialaufnahmebehälter (176) entnommen wird, wenn der Füllstand des Hilfsmaterials in dem Hilfsmaterialaufnahmebehälter (176) bis auf einen vorgegebenen Mindestfüllstand abgesunken ist oder bis auf einen vorgegebenen Maximalfüllstand angestiegen ist.

10. Verfahren nach einem der Ansprüche 3 bis 9, **dadurch gekennzeichnet, dass** das mit Overspray vermischte Hilfsmaterial in mindestens einem Hilfsmaterialaufnahmebehälter (176) fluidisiert wird, während mit Overspray vermischtes Hilfsmaterial aus dem Hilfsmaterialaufnahmebehälter (176) entnommen wird, und/oder
dass das Hilfsmaterial in mindestens einem Hilfsmaterialaufnahmebehälter (176) mittels einer Aufwirbelungseinrichtung (198) zumindest zeitweise aufgewirbelt wird, während mit Overspray vermischtes Hilfsmaterial aus dem Hilfsmaterialaufnahmebehälter (176) entnommen wird.

11. Vorrichtung zum Abtrennen von Nasslack-Overspray aus einem Overspray-Partikel enthaltenden Rohgasstrom (120), umfassend mindestens ein Filterelement (172) zum Abtrennen des Oversprays aus dem Rohgasstrom (120) und
mindestens einen Hilfsmaterialaufnahmebehälter (176) zum Aufnehmen eines Hilfsmaterials, das dem mit Nasslack-Overspray beladenen Rohgasstrom (120) zugegeben wird, bevor der Rohgasstrom (120) mindestens ein Filterelement (172) zum Abtrennen des Oversprays aus dem Rohgasstrom (120) passiert, während der Hilfsmaterialaufnahmebehälter (176) sich in einer Arbeitsposition befindet,
wobei der Hilfsmaterialaufnahmebehälter (176) in der Arbeitsposition so unterhalb von mindestens einem Filterelement (172) angeordnet ist, dass ein von dem Filterelement (172) abgereinigtes Gemisch aus Hilfsmaterial und Nasslack-Overspray beim Abreinigen nach unten in den Hilfsmaterialaufnahmebehälter gelangt,
**dadurch gekennzeichnet,**
**dass** die Vorrichtung (126) eine an mindestens einen Hilfsmaterialaufnahmebehälter (176) angeschlossene Hilfsmaterial-Zuführvorrichtung (290) zum Zuführen von frischem Hilfsmaterial direkt in den in Arbeitsposition befindlichen Hilfsmaterialaufnahmebehälter (176) umfasst und dass die Hilfsmaterial-Zuführvorrichtung (290) eine an den mindestens einen Hilfsmaterialaufnahmebehälter (176) angeschlossene Zuführleitung (300, 302) umfasst.

12. Vorrichtung nach Anspruch 11, **dadurch gekennzeichnet, dass** der Hilfsmaterialaufnahmebehälter (176) mit einer Aufwirbelungseinrichtung (198) zum Aufwirbeln von in dem Hilfsmaterialaufnahmebehälter (176) befindlichem Hilfsmaterial versehen ist.

13. Vorrichtung nach einem der Ansprüche 11 oder 12, **dadurch gekennzeichnet, dass** die Vorrichtung (126) eine Hilfsmaterial-Abführvorrichtung (308) zum Entnehmen von mit Overspray vermischtem Hilfsmaterial aus dem mindestens einen Hilfsmaterialaufnahmebehälter (176) umfasst und
dass die Hilfsmaterial-Abführvorrichtung (308) mindestens eine Absaugvorrichtung (310) zum Absaugen von mit Overspray vermischtem Hilfsmaterial aus mindestens einem Hilfsmaterialaufnahmebehälter (176) und/oder mindestens eine an mindestens einen Hilfsmaterialaufnahmebehälter (176) angeschlossene Hilfsmaterial-Abführleitung (312, 318) umfasst,
wobei vorzugsweise mindestens eine Hilfsmaterial-Abführleitung (318) in einem Eckbereich des Hilfsmaterialaufnahmebehälters (176) in einen Innenraum (186) des mindestens einen Hilfsmaterialaufnahmebehälters (176) mündet.

14. Vorrichtung nach einem der Ansprüche 11 bis 13, **dadurch gekennzeichnet, dass** mindestens ein Hilfsmaterialaufnahmebehälter (176) mit einem Füllstandssensor (204) zum Messen des Füllstands des Hilfsmaterials in dem Hilfsmaterialaufnahmebehälter (176) versehen ist.

15. Anlage zum Lackieren von Gegenständen, insbesondere von Fahrzeugkarosserien (102), umfassend mindestens einen Applikationsbereich (108) zum Applizieren von Nasslack auf die zu lackierenden Gegenstände und mindestens eine Vorrichtung (126) zum Abtrennen von Nasslack-Overspray nach einem der Ansprüche 11 bis 14.

## Claims

1. A method for supplying fresh auxiliary material, which is added to a stream (120) of crude gas laden with wet paint overspray before the stream (120) of crude gas passes through at least one filter element (172) for separating the overspray from the stream (120) of crude gas, to at least one filter device (132) which comprises at least one receptacle (176) for auxiliary material, which is in an operating position while the stream (120) of crude gas is passing through the filter element (172),
wherein the receptacle (176) for auxiliary material in the operating position is arranged underneath at least one filter element (172) so that, during cleaning, a mixture of auxiliary material and wet paint overspray cleaned off of the filter element (172) passes downwardly into the receptacle (176) for auxiliary material,
**characterised**
**in that** the fresh auxiliary material is supplied directly to the receptacle (176) for auxiliary material, while the receptacle (176) for auxiliary material is in the operating position and
**in that** the auxiliary material is supplied to the receptacle (176) for auxiliary material through an auxiliary material supply line (300, 302) connected to the receptacle (176) for auxiliary material.

2. A method according to claim 1, **characterised in that** the fresh auxiliary material is conveyed from at least one storage receptacle (292) into the at least one receptacle (176) for auxiliary material.

3. A method according to either of claims 1 or 2, **characterised in that** the auxiliary material mixed with overspray is removed from the at least one receptacle (176) for auxiliary material through an auxiliary material discharge line (312, 318) connected to the receptacle (176) for auxiliary material.

4. A method according to claim 3 **characterised in that** at least one auxiliary material discharge line (318) opens into an interior space (186) of the receptacle (176) for auxiliary material in a corner area of the receptacle (176) for auxiliary material and/or
**in that** at least two auxiliary material discharge lines (318) open into an interior space (186) of the receptacle (176) for auxiliary material.

5. A method according to either of claims 3 or 4, **characterised in that** the auxiliary material mixed with overspray is conveyed from the at least one receptacle (176) for auxiliary material into a collecting receptacle (316) and/or
**in that** the auxiliary material mixed with overspray is drawn out of the at least one receptacle (176) for auxiliary material by suction.

6. A method according to one of claims 3 to 5, **characterised in that** auxiliary material mixed with overspray is removed from at least one receptacle (176) for auxiliary material in order to empty the receptacle (176) for auxiliary material before fresh auxiliary material is supplied to the receptacle (176) for auxiliary material.

7. A method according to one of claims 3 to 6, **characterised in that** auxiliary material mixed with overspray is removed from at least one receptacle (176) for auxiliary material when the auxiliary material in the receptacle (176) for auxiliary material reaches a predetermined filling level.

8. A method according to claim 7, **characterised in that** the filling level of the auxiliary material is measured by means of a filling level sensor (204) arranged in the receptacle (176) for auxiliary material.

9. A method according to either of claims 7 or 8, **characterised in that** auxiliary material mixed with overspray is removed from at least one receptacle (176) for auxiliary material when the filling level of the auxiliary material in the receptacle (176) for auxiliary material has dropped to a predetermined minimum filling level or has risen to a predetermined maximum filling level.

10. A method according to one of claims 3 to 9, **characterised in that** the auxiliary material mixed with overspray is fluidised in at least one receptacle (176) for auxiliary material, while auxiliary material mixed with overspray is removed from the receptacle (176) for auxiliary material, and/or
**in that** the auxiliary material is whirled up at least periodically in at least one receptacle (176) for auxiliary material by means of a whirling device (198), while auxiliary material mixed with overspray is being removed from the receptacle (176) for auxiliary material.

11. A device for separating wet paint overspray from a stream (120) of crude gas containing overspray particles, which device comprises at least one filter element (172) for separating the overspray from the stream (120) of crude gas and
at least one receptacle (176) for auxiliary material for accommodating an auxiliary material which is added to the stream (120) of crude gas laden with wet paint overspray before the stream (120) of crude gas passes through at least one filter element (172) for separating the overspray from the stream (120) of crude gas, while the receptacle (176) for auxiliary material is in an operating position,
wherein the receptacle (176) for auxiliary material in the operating position is arranged underneath at least one filter element (172) so that, during cleaning, a mixture of auxiliary material and wet paint overspray cleaned off of the filter element (172) passes downwardly into the receptacle for auxiliary material,
**characterised**
**in that** the device (126) comprises a supply device (290) for auxiliary material connected to at least one receptacle (176) for auxiliary material for supplying fresh auxiliary material directly to the receptacle (176) for auxiliary material in the operating position, and in that the supply device (290) for auxiliary material comprises a supply line (300, 302) connected to the at least one receptacle (176) for auxiliary material.

12. A device according to claim 11, **characterised in that** the receptacle (176) for auxiliary material is provided with a whirling device (198) for whirling up auxiliary material in the receptacle (176) for auxiliary material.

13. A device according to either of claims 11 or 12, **characterised in that** the device (126) comprises a discharge device (308) for auxiliary material for removing auxiliary material mixed with overspray from the at least one receptacle (176) for auxiliary material, and
**in that** the discharge device (308) for auxiliary material comprises at least one suction device (310) for drawing auxiliary material mixed with overspray out of at least one receptacle (176) for auxiliary material by suction, and/or at least one discharge line (312, 318) for auxiliary material connected to at least one receptacle (176) for auxiliary material,
wherein preferably at least one auxiliary material discharge line (318) opens into an interior space (186) of the at least one receptacle (176) for auxiliary material in a corner area of the receptacle (176) for auxiliary material.

14. A device according to one of claims 11 to 13, **characterised in that** at least one receptacle (176) for auxiliary material is provided with a filling level sensor (204) for measuring the filling level of the auxiliary material in the receptacle (176) for auxiliary material.

15. A plant for painting objects, in particular vehicle bodies (102), comprising at least one application area (108) for applying wet paint to the objects to be painted and at least one device (126) for separating wet paint overspray according to one of claims 11 to 14.

## Revendications

1. Procédé pour amener un matériau adjuvant frais ajouté à un flux de gaz brut (120) chargé d'un excédent de peinture liquide, avant que le flux de gaz brut (120) traverse au moins un élément de filtre (172) pour la séparation de l'excédent de peinture du flux de gaz brut (120), dans au moins un dispositif de filtrage (132) qui comprend au moins un récipient de réception (176) de matériau adjuvant, le récipient de réception (176) se trouvant dans une position de travail pendant que le flux de gaz brut (120) traverse l'élément de filtre (172),
dans lequel le récipient de réception (176) de matériau adjuvant est disposé, en position de travail, en dessous d'au moins un élément de filtre (172) de sorte qu'un mélange de matériau adjuvant et d'excédent de peinture liquide, retiré par nettoyage de l'élément de filtre (172), s'écoule vers le bas dans le récipient de réception (176) de matériau adjuvant lors du nettoyage,
**caractérisé en ce que**
le matériau adjuvant est amené directement dans le récipient de réception (176) de matériau adjuvant pendant que le récipient de réception (176) de matériau adjuvant se trouve en position de travail, et
**en ce que** le matériau adjuvant est amené dans le récipient de réception (176) de matériau adjuvant par une conduite d'amenée (300, 302) de matériau adjuvant raccordée au récipient de réception (176) de matériau adjuvant.

2. Procédé selon la revendication 1, **caractérisé en ce que** le matériau adjuvant frais est refoulé d'au moins un réservoir (292) dans l'au moins un récipient de réception (176) de matériau adjuvant.

3. Procédé selon l'une des revendications 1 ou 2, **caractérisé en ce que** du matériau adjuvant mélangé à l'excédent de peinture est prélevé dans au moins un récipient de réception (176) de matériau adjuvant par une conduite d'évacuation (312, 318) de matériau adjuvant raccordée au récipient de réception (176) de matériau adjuvant.

4. Procédé selon la revendication 3, **caractérisé en ce que**, dans une zone de coin du récipient de réception (176) de matériau adjuvant, au moins une conduite d'évacuation (318) de matériau adjuvant débouche dans un espace intérieur (186) du récipient de réception (176) de matériau adjuvant, et/ou
**en ce qu'**au moins deux conduites d'évacuation (318) de matériau adjuvant débouchent dans un espace intérieur (186) du récipient de réception (176) de matériau adjuvant.

5. Procédé selon l'une des revendications 3 ou 4, **caractérisé en ce que** le matériau adjuvant mélangé à l'excédent de peinture est refoulé de l'au moins un récipient de réception (176) de matériau adjuvant vers un récipient collecteur (316), et/ou
**en ce que** le matériau adjuvant mélangé à l'excédent de peinture est pompé de l'au moins un récipient de réception (176) de matériau adjuvant.

6. Procédé selon l'une des revendications 3 à 5, **caractérisé en ce que** le matériau adjuvant mélangé à l'excédent de peinture est prélevé dans au moins un récipient de réception (176) de matériau adjuvant pour vider le récipient de réception (176) de matériau adjuvant avant que du matériau adjuvant frais soit amené dans le récipient de réception (176) de matériau adjuvant.

7. Procédé selon l'une des revendications 3 à 6, **caractérisé en ce que** du matériau adjuvant mélangé à l'excédent de peinture est prélevé dans au moins un récipient de réception (176) de matériau adjuvant, quand le matériau adjuvant atteint un niveau défini dans le récipient de réception (176) de matériau adjuvant.

8. Procédé selon la revendication 7, **caractérisé en ce que** le niveau du matériau adjuvant est mesuré au moyen d'un capteur de niveau (204) disposé dans le récipient de réception (176) de matériau adjuvant.

9. Procédé selon l'une des revendications 7 ou 8, **caractérisé en ce que** le matériau adjuvant mélangé à l'excédent de peinture est prélevé dans au moins un récipient de réception (176) de matériau adjuvant quand le niveau du matériau adjuvant dans le récipient de réception (176) de matériau adjuvant est descendu jusqu'à un niveau minimal prédéfini, ou est monté jusqu'à un niveau maximal prédéfini.

10. Procédé selon l'une des revendications 3 à 9, **caractérisé en ce que** le matériau adjuvant mélangé à l'excédent de peinture est fluidisé dans au moins un récipient de réception (176) de matériau adjuvant, pendant que du matériau adjuvant mélangé à l'excédent de peinture est prélevé dans le récipient de réception (176) de matériau adjuvant, et/ou
**en ce que** le matériau adjuvant est au moins temporairement dispersé dans au moins un récipient de réception (176) de matériau adjuvant au moyen d'un dispositif d'agitation (198), pendant que du matériau adjuvant mélangé à l'excédent de peinture est prélevé dans le récipient de réception (176) de matériau adjuvant.

11. Dispositif pour la séparation d'un excédent de peinture liquide d'un flux de gaz brut (120) contenant des particules d'excédent de peinture, comprenant
au moins un élément de filtre (172) pour la séparation de l'excédent de peinture du flux de gaz brut (120) et
au moins un récipient (176) pour la réception d'un matériau adjuvant ajouté au flux de gaz brut (120) chargé de l'excédent de peinture liquide, avant que le flux de gaz brut (120) traverse au moins un élément de filtre (172) pour la séparation de l'excédent de peinture du flux de gaz brut (120) pendant que le récipient de réception (176) de matériau adjuvant se trouve dans une position de travail,
dans lequel le récipient de réception (176) de matériau adjuvant est disposé, en position de travail, en dessous d'au moins un élément de filtre (172), de sorte qu'un mélange de matériau adjuvant et d'excédent de peinture liquide, retiré par nettoyage de l'élément de filtre (172), s'écoule vers le bas dans le récipient de réception de matériau adjuvant lors du nettoyage,
**caractérisé en ce que**
le dispositif (126) comprend un dispositif (290) d'amenée de matériau adjuvant, raccordé à au moins un récipient de réception (176) de matériau adjuvant, pour l'amenée directe de matériau adjuvant frais vers le récipient de réception (176) de matériau adjuvant se trouvant en position de travail, et **en ce que** le dispositif (290) d'amenée de matériau adjuvant comprend une conduite d'amenée (300, 302) raccordée à l'au moins un récipient de réception (176) de matériau adjuvant.

12. Dispositif selon la revendication 11, **caractérisé en ce que** le récipient de réception (176) de matériau adjuvant est pourvu d'un dispositif d'agitation (198) pour la dispersion du matériau adjuvant se trouvant dans le récipient de réception (176) de matériau adjuvant.

13. Dispositif selon l'une des revendications 11 ou 12, **caractérisé en ce que** le dispositif (126) comprend un dispositif d'évacuation (308) de matériau adjuvant pour le prélèvement de matériau adjuvant mélangé à l'excédent de peinture dans l'au moins un récipient de réception (176) de matériau adjuvant, et
**en ce que** le dispositif d'évacuation (308) de matériau adjuvant comprend au moins un dispositif d'aspiration (310) pour le pompage de matériau adjuvant mélangé à l'excédent de peinture dans l'au moins un récipient de réception (176) de matériau adjuvant
et/ou au moins une conduite d'évacuation (312, 318) de matériau adjuvant raccordée à au moins un récipient de réception (176) de matériau adjuvant,
dans lequel préférentiellement, dans une zone de coin du récipient de réception (176) de matériau adjuvant, au moins une conduite d'évacuation (318) de matériau adjuvant débouche dans un espace intérieur (186) de l'au moins un récipient de réception (176) de matériau adjuvant.

14. Dispositif selon l'une des revendications 11 à 13, **caractérisé en ce qu'**au moins un récipient de réception (176) de matériau adjuvant est pourvu d'un capteur de niveau (204) pour mesurer le niveau du matériau adjuvant dans le récipient de réception (176) de matériau adjuvant.

15. Installation pour la peinture d'objets, en particulier de carrosseries de véhicules (102), comprenant au moins une zone d'application (108) pour l'application de peinture liquide sur les objets à peindre, et au moins un dispositif (126) pour la séparation d'un excédent de peinture liquide selon l'une des revendications 11 à 14.
